# EUROPÄISCHE PATENTSCHRIFT

(11) **EP 3 615 799 B1**
(45) Veröffentlichungstag und Bekanntmachung des Hinweises auf die Patenterteilung: **27.01.2021**
(21) Anmeldenummer: 18713645.2
(22) Anmeldetag: 23.03.2018
(51) Int. Cl.: F04B 35/04, F04B 39/00, F04B 39/12, F04B 35/01

(54) **VERDICHTERANORDNUNG FÜR EINE DRUCKLUFTZUFÜHRUNG EINER DRUCKLUFTVERSORGUNGSANLAGE**
COMPRESSOR ASSEMBLY FOR A COMPRESSED-AIR FEED OF A COMPRESSED-AIR SUPPLY SYSTEM
ENSEMBLE COMPRESSEUR POUR L'ALIMENTATION EN AIR COMPRIMÉ D'UN SYSTÈME D'ALIMENTATION EN AIR COMPRIMÉ

(30) Priorität: 28.04.2017 DE 102017004087
(43) Veröffentlichungstag der Anmeldung: 04.03.2020
(73) Patentinhaber: WABCO GmbH, 30453 Hannover Niedersachsen (DE)
(72) Erfinder: BREDBECK, Klaus, 31628 Landesbergen (DE); STABENOW, Uwe, 30880 Laatzen (DE)
(86) Internationale Anmeldenummer: PCT/EP2018/057501
(87) Internationale Veröffentlichungsnummer: WO 2018/197123

(56) Entgegenhaltungen:
- DE-A1-102004 020 104
- DE-A1-102005 009 445
- US-A1- 2003 140 729

## Beschreibung

Die Erfindung betrifft eine Verdichteranordnung für eine Druckluftzuführung einer Druckluftversorgungsanlage, zum Betreiben einer Pneumatikanlage, aufweisend einen Verdichter, insbesondere Kompressor, mit mindestens einem Pleuel, einem Pleuellager und einem Zylinder, wobei das Pleuel einen Verdichterkolben aufweist, einen Antrieb mit einer Antriebswelle, einem Antriebsgehäuse, wobei die Antriebswelle in mindestens einem innerhalb des Antriebsgehäuses angeordneten Antriebslager gelagert ist.

Die Erfindung betrifft auch eine Druckluftversorgungsanlage zum Betreiben einer Pneumatikanlage.

Verdichter, insbesondere Verdichter in Druckluftversorgungsanlagen in Fahrzeugen, sind allgemein bekannt. Allgemein stellen bei der Verbesserung eines solchen Verdichters Kompaktheit, Robustheit, Effizienz sowie ein geräusch- und vibrationsarmer Betriebs wichtige Aspekte dar.

Verdichter, welche die Einstellbarkeit des Kurbeltriebs auf die Motorwelle zwecks Reduzierung des Lagerspiels und somit der Geräuschentwicklung vorsehen, sind bekannt. So beschreibt DE 10 2005 009 445 B4 ein Kompressoraggregat zur Erzeugung von Druckluft in einem Fahrzeug, mit einem Kolbenkompressor und einem Motor zum Antrieb des Kolbenkompressors, wobei dessen Kolben über eine Pleuel/Kurbeltrieb-Anordnung von dem Motor über eine Motorwelle angetrieben wird, dadurch gekennzeichnet, dass der Kurbeltrieb beim Zusammenbau des Kompressoraggregates in Längsrichtung der Motorwelle auf der Motorwelle justierbar ist.

Eine Verdichteranordnung der DE 10 2004 020 104 A1 zeigt einen Doppelkolben für einen Verdichter, mit einem länglichen Kolbenträger, der an jedem Ende einen Kolben aufweist, und mit einem etwa parallel zum Kolbenträger verlaufenden Pleuel, das mittels eines Antriebslagers auf einem Bolzen des Kolbenträgers drehbar gelagert ist und im Abstand davon mittels eines Pleuellagers auf einem Exzenter einer Antriebseinrichtung lagerbar ist; Antriebslager und Pleuellager liegen also in etwa in gleicher axialer Richtung in Abstand übereinander. Der Kolbenträger enthält in einem mittleren Bereich, der sich zwischen beiden Kolben erstreckt, einen zur frei beweglichen Aufnahme des Pleuels bemessenen Zwischenraum, in dem das Pleuel frei beweglich aufgenommen ist.

Weiterhin sind Verfahren zum direkten Massenausgleich bei Kolbenmaschinen bekannt. DE 2424562 A1 beschreibt ein Verfahren des direkten Massenausgleichs. Der direkte Massenausgleich ist dadurch gekennzeichnet, dass der Kolben seinen Schwerpunkt in seiner Drehachse um den Kolbenbolzen hat, am Pleuel ein Ausgleichsgewicht angebracht wird und das System aller oszillierender Teile so ausgewuchtet wird, dass der gemeinsame Schwerpunkt sich in der Drehachse der Kurbelwelle befindet.

Das Konzept, insbesondere die eingangs dargestellten Bauformen von Verdichteranordnungen, sind noch verbesserungswürdig, insbesondere hinsichtlich eines geräusch- und vibrationsarmen Betriebs.

Wünschenswert ist es daher, die Funktion einer Verdichteranordnung, insbesondere der mechanischen Kopplung von Antrieb und Verdichter, insbesondere hinsichtlich dieser Aspekte, nämlich eines geräusch- und vibrationsarmen Betriebs, zu verbessern.

An dieser Stelle setzt die Erfindung an, deren Aufgabe es ist, in verbesserter Weise eine Verdichteranordnung anzugeben, die insbesondere die oben beschriebenen Probleme adressiert.

Die Aufgabe, betreffend die Verdichteranordnung, wird durch die Erfindung mit einer Verdichteranordnung des Anspruchs 1 gelöst.

Die Erfindung geht aus von einer Verdichteranordnung für eine Druckluftzuführung einer Druckluftversorgungsanlage, zum Betreiben einer Pneumatikanlage, aufweisend einen Verdichter, insbesondere Kompressor, mit mindestens einem Pleuel, einem Pleuellager und einem Zylinder, wobei das Pleuel einen Verdichterkolben aufweist, einen Antrieb mit einer Antriebswelle, einem Antriebsgehäuse, wobei die Antriebswelle in mindestens einem innerhalb des Antriebsgehäuses angeordneten Antriebslager gelagert ist.

Erfindungsgemäß ist bei der Verdichteranordnung gemäß einem ersten Aspekt vorgesehen, dass sich das Antriebslager und das Pleuellager in axialer Richtung teilweise oder vollständig überdecken, oder die axiale Mittenebene von Antriebslager und die axiale Mittenebene des Pleuellagers in einer Lagerebene liegen.

Weiter ist erfindungsgemäß gemäß einem zweiten Aspekt vorgesehen, dass eine Kurbelscheibe fest mit einem Endabschnitt der Antriebswelle verbunden ist, und weiterhin die Kurbelscheibe an einem exzentrisch zur Antriebswelle angeordneten Pleuel-Aufnahmeabschnitt über das Pleuellager drehbeweglich mit dem Pleuel verbunden ist.

Die Erfindung geht von der Überlegung aus, dass ein Abstand in axialer Richtung zwischen der axialen Mittenebene des Antriebslagers und der axialen Mittenebene des Pleuellagers zu einem Biegemoment führt, welches insbesondere in einer Verformung der Antriebswelle resultiert. Eine derartige Verformung führt bei einer drehenden Antriebswelle zu unvorteilhaften dynamischen Belastungszuständen und einer Geräusch- und Vibrationsentwicklung. Derartige Geräusch- und Vibrationsentwicklungen können durch gegebenenfalls über die Betriebszeit zunehmendes Lagerspiel noch weiter verstärkt werden. Solche Verformungen sind insbesondere auf Pleuelkräfte zurückzuführen, welche bei dem Verdichten der Luft durch die Bewegung des Verdichterkolben im Zylinder entstehen und über das Pleuellager und/oder das Antriebslager in die Antriebswelle geleitet werden. Das Biegemoment ist dabei proportional zu den Pleuelkräften und dem Abstand in axialer Richtung zwischen der axialen Mittenebene des Antriebslagers und der axialen Mittenebene des Pleuellagers.

Die Erfindung hat erkannt, dass eine Verringerung des Abstandes in axialer Richtung zwischen der axialen Mittenebene des Antriebslagers und der axialen Mittenebene des Pleuellagers, das auf die Antriebswelle wirkende Biegemoment reduziert wird. Eine Verringerung kann insbesondere erreicht werden, wenn das Antriebslager in radialer Richtung innerhalb des Pleuellagers angeordnet ist. Insbesondere wird bei einer vollständigen Vermeidung des Abstandes in axialer Richtung zwischen der axialen Mittenebene des Antriebslagers und der axialen Mittenebene des Pleuellagers ein durch Pleuelkräfte hervorgerufenes, auf die Antriebswelle wirkendes Biegemoment vollständig vermieden.

Gemäß dem ersten Aspekt ist deshalb vorteilhaft vorgesehen, dass sich das Antriebslager und das Pleuellager in axialer Richtung teilweise oder vollständig überdecken.

Eine derartige Weiterbildung mit einer überdeckenden Anordnung führt zu dem Vorteil, dass der Abstand in axialer Richtung zwischen der axialen Mittenebene des Antriebslagers und der axialen Mittenebene des Pleuellagers reduziert wird und somit einen positiven Einfluss auf die Vermeidung von Biegemomenten hat, die durch Pleuelkräfte hervorgerufen werden und auf die Antriebswelle wirken.

Im Rahmen einer besonders bevorzugten Weiterbildung ist vorgesehen, dass die axiale Mittenebene von Antriebslager und die axiale Mittenebene von Pleuellager praktisch in einer Lagerebene liegen. Konkret bedeutet dies, dass sich die Mittenebenen von Pleuellager und Antriebslager praktisch in einer gemeinsamen Ebene befinden.

Eine derartige Weiterbildung führt zu dem Vorteil, dass der Abstand in axialer Richtung zwischen der axialen Mittenebene des Antriebslagers und der axialen Mittenebene des Pleuellagers praktisch gleich Null ist, und somit durch Pleuelkräfte hervorgerufene und auf die Antriebswelle wirkende Biegemomente, auf ein vernachlässigbares Minimum reduziert sind, insbesondere praktisch nicht vorhanden sind.

Weiter geht die Erfindung von der Überlegung aus, dass die im Betrieb beschleunigten, nicht ausgewuchteten Massen der Verdichteranordnung, insbesondere Pleuel, Kurbelscheibe und Antriebswelle, zu Geräusch- und Vibrationsentwicklung im Betrieb führen. Die linear und rotatorisch bewegten Massen führen zu Kräften und Momenten, welche den Betrieb der Verdichteranordnung hinsichtlich Geräusch- und Vibrationsentwicklung negativ beeinflussen.

Die Erfindung hat daher weiterhin erkannt, dass ein Auswuchten des Gesamtsystems bewegter Massen, insbesondere des aus Verdichterkolben, Pleuel und Kurbelscheibe bestehenden Massensystems, insbesondere einschließlich sämtlicher benötigten Befestigungs-, Lagerungs- und Führungselemente, zu einer vorteilhaften Verminderung bzw. Vermeidung von Geräuschen und Vibrationen im Betrieb führt. Zur Auswuchtung können insbesondere Ausgleichsgewichte sowohl an Pleuel als auch an Kurbelscheibe eingesetzt werden.

Insbesondere besteht das synergetische Ziel des Konzepts der Erfindung darin, den Schwerpunkt des Massensystems in die Drehachse der Antriebswelle zu legen und dabei negative, insbesondere durch Biegemomente hervorgerufene, mechanische Auswirkungen wie Vibrationen, Körperschall- und Luftschallentwicklung möglichst zu unterbinden. Dies wird insbesondere erreicht aufgrund der innovativen Auswuchtung der Lageranordnung, mit welcher der Schwerpunkt derselben derart angeordnet ist, dass Biegemomente verringert sind. Insbesondere bei Fahrzeugen im PKW-Bereich ist ein geräusch- und vibrationsarmer Betrieb von großer Bedeutung, da hier, im Unterschied zu Anwendungen im LKW-Bereich, die Akustikanforderungen höher bzw. sensibler sind.

Das Konzept bietet vorzugsweise die Basis für eine in verbesserter Weise funktionierende, insbesondere vibrations- und geräuscharme Verdichteranordnung. Weiterhin führen eine Reduzierung von Kräften und/oder Momenten sowie insbesondere eine Reduzierung der mit den Kräften und/oder Momenten verbundenen dynamischen Belastungen und Vibrationen, zu einer schonenderen Betriebsweise, welche sich auf Effizienz und Langlebigkeit der Verdichteranordnung positiv auswirken.

Konzeptionell werden die Vorteile der Erfindung durch die biegemomentfreie Anordnung der Lager, insbesondere eines Pleuellagers und eines Antriebslager, in einer Ebene erreicht. Weiterhin wird, insbesondere hiermit zusammenwirkend, durch die vorteilhafte Anordnung der einzelnen bewegten Komponenten, insbesondere von Pleuel, Kurbelscheibe, Verdichterkolben, in einem Massensystem sowohl ein praktisch vollständiger oszillierender als auch ein praktisch rotatorischer Massenausgleich des Massensystems und damit insbesondere eine vibrations- und geräuscharme Verdichteranordnung erreicht.

Vorteilhafte Weiterbildungen der Erfindung sind den Unteransprüchen zu entnehmen und geben im Einzelnen vorteilhafte Möglichkeiten an, das oben erläuterte Konzept im Rahmen der Aufgabenstellung sowie hinsichtlich weiterer Vorteile zu realisieren.

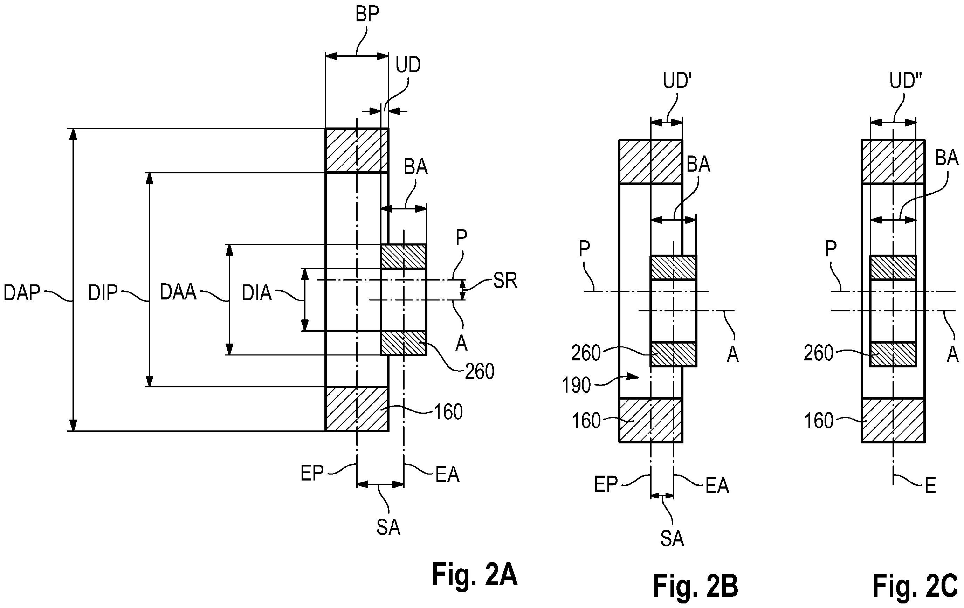

Vorzugsweise sind die Kurbelscheibe, das Antriebslager und das Pleuellager derartig angeordnet ist, dass sich das Antriebslager in radialer Richtung zumindest teilweise innerhalb des Pleuellagers befindet. Damit ist vor allem gemeint, dass sich - in einer Projektionsebene senkrecht zur Drehachse betrachtet - der Außendurchmesser des Antriebslagers vollständig innerhalb des Innendurchmessers des Pleuellagers befindet; dies ist beispielhaft in Fig. 2A-2C dargestellt. Dies kann im Rahmen der Weiterbildung vor allem bedeuten, dass das Antriebslager in axialer Richtung derartig entlang der Drehachse in Richtung des Pleuellagers oder des Antriebs --also seitlich-- verschoben ist, dass es sich hinsichtlich seiner axialen Ausdehnung ganz oder teilweise innerhalb des Pleuellager-Innenraums befindet. Insbesondere kann dies vorteilhaft auch bedeuten, dass das Antriebslager derart entlang der Drehachse des Antriebs in Richtung des Pleuellagers verschoben angeordnet ist, dass es mit einem bestimmten, als Überdeckung bezeichneten, Abstand in einen Pleuellager-Innenraum des Pleuellagers hineinragt. Der Fall, dass sich das Antriebslager vollständig im Pleuellager-Innenraum befindet, wird als vollständige Überdeckung bezeichnet.

Bei gleichzeitiger Anordnung des Antriebslagers - in radialer Richtung betrachtet - innerhalb des Pleuellagers und gemäß dem ersten Aspekt der Erfindung führt dies zu einer besonders vorteilhaften Ausbildung.

Insbesondere ist vorgesehen, dass ein Flanschbereich zur Aufnahme des Antriebslagers als Teil eines an dem Antriebsgehäuse ausgebildeten Antriebsgehäusedeckels gebildet ist und das Antriebslager innerhalb des Flanschbereiches befestigt ist.

Insbesondere kann dies bedeuten, dass das Antriebslager nicht direkt im Antriebsgehäuse aufgenommen ist, sondern in einem mit dem Antriebsgehäuse verbundenen Deckel, dem Antriebsgehäusedeckel. Auf diese Weise wird die Demontage des Antriebs dahingehend vereinfacht, dass mit dem Entfernen des Antriebsgehäusedeckels die Antriebswelle ebenfalls, insbesondere ohne das weitere Lösen von Verbindungen, demontiert ist.

Im Rahmen einer besonders bevorzugten Weiterbildung ist vorgesehen, dass das Antriebsgehäuse einen Motor, insbesondere Elektromotor, umfasst und pleuelseitig mittels dem Antriebsgehäusedeckel abgedeckt ist, wobei sich der Antriebsgehäusedeckel pleuelseitig zu dem Flanschbereich verjüngt, insbesondere konisch verjüngt.

Dies führt insbesondere zu dem Vorteil, insbesondere bei einer sich in Richtung der Lagerebene verjüngenden und in das Verdichtergehäuse hineinragenden Ausbildung des Antriebsgehäusedeckels, dass das Antriebslager auf besonders vorteilhafte Weise innerhalb der Lagerebene gemäß dem Konzept der Erfindung positioniert werden kann. Auf diese Weise wird insbesondere vorteilhaft vermieden, dass Biegemomente aufgrund von Pleuelkräften entstehen, welche sich auf das Antriebslager und die Antriebswelle auswirken.

Vorteilhaft ist vorgesehen, dass das Antriebslager innerhalb des Flanschbereiches, insbesondere kraftschlüssig, insbesondere durch eine Presspassung, befestigt ist.

Insbesondere ist vorgesehen, dass der Flanschbereich zur innenseitigen Aufnahme des Antriebslagers ausgebildet ist und in die Kurbelscheibe hineinragt.

Im Rahmen einer besonders bevorzugten Weiterbildung ist vorgesehen, dass die Kurbelscheibe mit einer innenseitig des Pleuel-Aufnahmeabschnitts liegenden, zum Antriebsgehäusedeckel offenen topfartigen Ausnehmung der Kurbelscheibe den Flanschbereich umgreift.

Vorteilhaft ist vorgesehen, dass die topfartige Ausnehmung der Kurbelscheibe an dem Flanschbereich liegt, nämlich eine Außenseite des Flanschbereichs und eine Innenseite der topfartigen Ausnehmung, sich radial gegenüberliegen und/oder führen.

Insbesondere ist vorgesehen, dass die Kurbelscheibe fest über einen Kegelsitz der Kurbelscheibe auf dem Endabschnitt der Antriebswelle kraftschlüssig, insbesondere reibschlüssig, verbunden ist, und/oder Kurbelscheibe fest über eine Presspassung auf dem Endabschnitt der Antriebswelle sitzt. Für einen Kegelsitz müsste der Endabschnitt konisch, d. h. insbesondere sich zu dem aus dem Gehäuse hinausragenden Ende der Antriebswelle verjüngend, ausgebildet sein. Auf diese Weise könnte die Kurbelscheibe, welche entsprechend eine zu dem konischen Endabschnitt passende, ebenfalls konische Hohlaufnahme aufweist, auf den Endabschnitt aufgesetzt werden und axial fixiert werden. Das kann heißen, dass ein Gegenhalten an dem anderen Ende der Antriebswelle beim Aufpressvorgang möglich sein muss. Ein Gegenhalten kann jedoch auch entbehrlich sein. Beispielsweise kann die Montage über eine vergleichsweise geringe aufzubringende Axialpresskraft erfolgen, sodass ein Reibschluss in der Kegelverbindung erzeugt wird. Die finale Verschraubung erfolgt anschließend ohne Gegenhalten an dem anderen Ende der Antriebswelle.

Vorteilhaft ist vorgesehen, dass die Antriebswelle mittels des pleuelseitigen Antriebslagers innerhalb des Antriebsgehäuses, insbesondere am Flanschbereich, und eines motorseitig gegenüberliegendem Antriebswellenlagers, insbesondere an einem Antriebsgehäuseboden, gelagert ist.

Vorzugsweise ist ein Pleuelausgleichsgewicht am Pleuel angeordnet, insbesondere an einer dem Verdichterkolben abgewandten Seite des Pleuels.

Insbesondere ist vorgesehen, dass das Pleuel einen Pleuelring und eine Pleuelstange aufweist, wobei das Pleuelausgleichsgewicht am Pleuelring angeordnet ist, derart, dass sich der Schwerpunkt eines im Wesentlichen das Pleuel, das Pleuellager und den Verdichterkolben aufweisenden Teilsystems, mittels der Anordnung des Pleuelausgleichsgewichts am Pleuel auf der Drehachse des Pleuellagers befindet.

Konkret bedeutet dies, dass durch die Befestigung eines Ausgleichsgewichts am Pleuel, insbesondere an der dem Verdichterkolben gegenüberliegenden Seite des Pleuels, der Schwerpunkt des aus Pleuel, Pleuellager und Verdichterkolben bestehenden Teilsystems auf die Drehachse des Pleuellagers in das Zentrum des Pleuelauges gelegt wird.

Somit kann sich das Teilsystem in vorteilhafter Weise frei von linearen Trägheitskräften um die Drehachse des Pleuellagers drehen. Das Teilsystem befindet sich so praktisch im ausgewuchteten Zustand.

Im Rahmen einer besonders bevorzugten Weiterbildung ist vorgesehen, dass ein Kurbelscheiben-Ausgleichsgewicht mit der Kurbelscheibe drehbar fest an der Kurbelscheibe angeordnet ist, insbesondere derart, dass es an einer dem Verdichterkolben abgewandten Seite der Kurbelscheibe befindlich ist wenn der Verdichterkolben in einer oberen Position seines Arbeitsspiels ist. Auf diese Weise wir in vorteilhafter Weise ein Massenausgleich um die Achse A erreicht, insbesondere dadurch, dass die Trägheitskräfte des Kurbelscheiben-Ausgleichsgewichts insbesondere den des Pleuels und an das Pleuel angeschlossenen Massen entgegenwirken.

Auch ist es vorteilhaft möglich, ein mehrere Pleuel aufweisendes Massensystem zu bilden, insbesondere zur Umsetzung eines mehrstufigen Verdichters, für welches dann gemäß dem Konzept dieser Weiterbildung ein Massenausgleich erreicht wird. Hierzu können beispielsweise zwei Pleuel axial nebeneinander auf einer Kurbelscheibe angeordnet sein. Ebenfalls kann vorteilhaft ein Massensystem gebildet werden, welches lediglich ein Pleuel, jedoch zwei gegenüberliegend angeordnete Verdichterkolben aufweist. Ein derartiges Massensystem kann dann gemäß dem Konzept der Weiterbildung ausgewuchtet werden.

Vorteilhaft ist vorgesehen, das Pleuel einen Pleuelring und eine Pleuelstange aufweist, wobei das Pleuelausgleichsgewicht am Pleuelring angeordnet ist, derart, dass sich ein Schwerpunkt eines Massensystems, mittels der Anordnung eines Kurbelscheiben-Ausgleichsgewichts, in der Drehachse der Antriebswelle befindet, wobei das Massensystem das aus Pleuel, Pleuellager, Pleuelausgleichsgewicht und Verdichterkolben bestehende Teilsystem sowie Kurbelscheibe und gegebenenfalls Befestigungselemente zur Fixierung des Pleuellagers oder weiterer Bestandteile des Systems, aufweist.

Konkret bedeutet dies, dass durch die Befestigung eines Ausgleichsgewichts an der Kurbelscheibe das aus Pleuel, Pleuellager, Pleuelausgleichsgewicht und Verdichterkolben bestehende Teilsystem sowie Kurbelscheibe bestehenden Gesamtsystem einen Schwerpunkt aufweist, welcher auf der Drehachse der Antriebswelle liegt. Auf diese Weise findet bei einer Drehung um die Drehachse der Antriebswelle eine Bewegung des Gesamtsystems praktisch frei von linearen Trägheitskräften statt, was insbesondere zu einem geräusch- und vibrationsarmen Betrieb der Verdichteranordnung gemäß dem Konzept der Erfindung führt.

Im Rahmen einer besonders bevorzugten Weiterbildung ist vorgesehen, dass das Pleuel und der Verdichterkolben starr miteinander verbunden sind, insbesondere der Verdichter als Taumelkolbenkompressor ausgebildet ist. Dies bedeutet konkret, dass Pleuel und Verdichterkolben im Wesentlichen einstückig ausgebildet sind. Dies führt zu dem Vorteil, dass weniger bewegte Teile zur Kopplung von Antrieb und Verdichterkolben eingesetzt werden müssen und gegebenenfalls auch keine Führungselemente für den Kolben zur Aufnahme seitlicher, durch das Pleuel eingeleiteter Kräfte, benötigt werden. Etwaige, sich durch die Taumelkinematik ergebende Spalte zwischen Zylinder und Verdichterkolben werden in einer derartigen Ausführungsform durch geeignete Dichtungen, insbesondere Kolbenmanschettendichtungen, abgedichtet.

Vorteilhaft ist vorgesehen, dass der Verdichter als einstufiger Verdichter oder als mehrstufiger Verdichter, insbesondere zweistufiger Verdichter, ausgebildet ist und/oder der Verdichter genau ein Pleuel oder mehrere, insbesondere zwei Pleuel, aufweist.

Konkret kann dies bedeuten, dass das Gas, insbesondere die Luft, in einer Verdichtungskammer verdichtet wird. Diese Verdichtungskammer wird von dem Innenraum des Zylinders und der dem Pleuel gegenüberliegenden Seite des Verdichterkolben gebildet.

Im Falle eines mehrstufigen Verdichters, insbesondere zweistufigen Verdichters, kann dies konkret bedeuten, dass das Gas, insbesondere die Luft, in zwei oder mehreren Verdichtungskammern verdichtet wird. Im Falle eines zweistufigen Verdichters kann das Gas beispielsweise in zwei Verdichtungskammern verdichtet werden, die jeweils durch den Zylinder sowie einem beidseitig druckbeaufschlagbaren Verdichterkolben gebildet werden. Die dem Pleuel gegenüberliegende Seite des Verdichterkolben bildet hierbei zusammen mit dem auf dieser Seite des Verdichterkolben liegenden Innenraum des Zylinders die erste Verdichtungskammer. Die dem Pleuel zugewandte Seite bildet weiterhin zusammen mit dem auf jener Seite des Verdichterkolben liegenden Innenraum des Zylinders die zweite Verdichtungskammer.

Auch kann weiterhin ein doppelstufiger Verdichter mittels eines Doppelpleuels realisiert werden, welches jeweils an einem Ende einen Verdichterkolben aufweist, welche jeweils zum Verdichten von Gas bzw. Luft innerhalb jeweils eines Zylinders ausgebildet sind, wobei insbesondere die Zylinder zueinander gegenüberliegend angeordnet sind.

Eine Weiterbildung mit einem Pleuel bedeutet konkret, dass ein Verdichter mittels eines Pleuels realisiert ist, der entweder einstufig oder - insbesondere wie oben beschrieben - auch mehrstufig ausgebildet sein kann.

Eine Weiterbildung mit mehreren, insbesondere zwei Pleueln, bedeutet konkret, dass ein mehrstufiger Verdichter durch die Anordnung mehrerer, insbesondere von zwei, Kolben realisiert werden kann, wobei die Kolben jeweils über einen Verdichterkolben und ein Pleuel verfügen. Diese werden insbesondere von einer Antriebswelle bzw. einer Kurbelscheibe angetrieben und sind vorteilhaft derart angeordnet, dass sich das Gesamtsystem in einem praktisch ausgewuchteten Zustand befindet.

Vorteilhaft ist vorgesehen, dass das Pleuellager als ein Wälzlager, insbesondere ein Kugellager, Nadellager, Zylinderrollenlager, Tonnenlager oder dergleichen Wälzlager gebildet ist und/oder das Antriebslager als ein Gleitlager oder Nadellager gebildet ist.

Konkret bedeutet dies, dass eine Lagerform in Abhängigkeit der konstruktiven Anforderungen gewählt wird. Nadel- und Zylinderrollenlager und allgemein Wälzlager mit zylindrischen Wälzkörpern haben aufgrund des Linienkontaktes mit der Lauffläche eine generell hohe radiale Tragfähigkeit. Bei einem Nadellager kommt hinzu, dass es aufgrund der geringen Wälzkörperdurchmesser relativ kompakt ist, und somit in vorteilhafter Weise den Einbauraum des Antriebs weiter verkleinert. Kugellager weisen aufgrund der Schmiegung in den Wälzkontakten eine relativ hohe axiale und radiale Tragfähigkeit auf. Tonnenlager ermöglichen weiterhin, aufgrund der balligen Ausführung der Wälzkörper und einer hohlkugeligen Außenringlaufbahn, eine gewisse Pendelbewegung zwischen Innen- und Außenring. Somit wird eine Unempfindlichkeit gegen Schiefstellung und Fluchtfehler der Antriebswelle gegenüber dem Gehäuse erreicht.

Konkret kann weiterhin die Ausbildung eines Antriebslagers als ein Gleitlager durch eine geschmierte oder schmierungsfreie Gleitlagerung erreicht werden. Dies führt in vorteilhafter Weise zu einer wartungsarmen, besonders bevorzugt wartungsfreien, Auslegung der drehbeweglichen Verbindung, da sie - abgesehen von der Relativbewegung zwischen Welle und Lager - keine bewegten Teile, insbesondere keine Wälzkörper, aufweist.

Vorteilhaft ist vorgesehen, dass wenigstens der Pleuelring auf der Seite der Kurbelscheibe und/oder auf der Seite des zum Antriebsgehäusedeckels mittels eines Anlaufschutzes in einer axialen Bewegungsrichtung, insbesondere in Richtung der Drehachse des Pleuellagers, begrenzt ist.

Hierdurch wird in vorteilhafter Weise erreicht, dass ein Bewegungsraum in axialer Richtung, das heißt in Richtung der Antriebsachse A, begrenzt wird und so beispielsweise ein Loslager als Pleuellager eingesetzt werden kann. Dies führt zu dem Vorteil, dass eine Selbstzentrierung des Pleuellagers durch diesen axialen Freiheitsgrad erfolgen kann, insbesondere so keine Zwangslagerung des Pleuels erfolgt.

Vorteilhaft ist vorgesehen, dass ein axialer Begrenzungsschutz gebildet ist mittels wenigstens einer Ringscheibe. Dies kann bedeuten, dass ein axialer Begrenzungsschutz gebildet ist mittels wenigstens einem Ring, insbesondere mindestens einer an der Kurbelscheibe fixierten, separaten Ringscheibe. Durch einen axialen Begrenzungsschutz gemäß dieser Weiterbildung wird in vorteilhafter Weise erreicht, dass durch einen insbesondere durch Ringscheiben gebildeten Begrenzungsschutz, in vorteilhafter Weise die Reibung zwischen den in Relativbewegung zueinander stehenden Komponenten vermindert wird. Hierzu können der Begrenzungsschutz bzw. die Ringscheiben aus einem reibungsarmen Material, insbesondere PTFE, ausgebildet sein. Auch ist es denkbar, dass die Ringscheiben oder auch der Anlaufschutz, aus glasfaserverstärktem Kunststoff ausgebildet sind.

Vorteilhaft ist vorgesehen, dass ein axialer Begrenzungsschutz gebildet ist durch einen Kurbel-Flanschabschnitt und/oder durch einen Ringflansch. Somit soll ermöglicht werden, mittels einer anderen geeigneten, insbesondere axial ortsfesten, Fläche, insbesondere ein Kurbel-Flanschabschnitt, oder einer Fläche die nicht an der Kurbelscheibe angeordnet ist, eine axiale Begrenzung des Pleuels zu gewährleisten. Eine solche, nicht an der Kurbelscheibe angeordnete Fläche kann beispielsweise durch einen angeformten Ringflansch am Antriebsgehäusedeckel oder eine andere geeignete Fläche am Antriebsgehäuse, Antriebsgehäusedeckel, Verdichtergehäuse oder dergleichen gebildet werden.

Die Erfindung führt zur Lösung der Aufgabe auch auf eine Druckluftversorgungsanlage zum Betreiben einer Pneumatikanlage. Diese Druckluftversorgungsanlage weist auf: eine vorgenannte Verdichteranordnung, einen Lufttrockner und eine Ventilanordnung. Weiterhin führt die Erfindung zur Lösung der Aufgabe auch auf ein Fahrzeug, mit einer Druckluftversorgungsanlage und einer Pneumatikanlage, wobei die Druckluftversorgungsanlage eine Verdichteranordnung gemäß dem Konzept der Erfindung aufweist. Eine Verdichteranordnung gemäß dem Konzept der Erfindung ist insbesondere bei PKW vorteilhaft, da im Bereich der PKW hohe Akustikanforderungen herrschen und ein geräusch- und vibrationsarmer Betrieb der Verdichteranordnung hohe Bedeutung besitzt bzw. vorteilhaft ist.

Ausführungsformen der Erfindung werden nun nachfolgend anhand der Zeichnung beschrieben. Diese soll die Ausführungsformen nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsformen oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsformen sowie anhand der Zeichnung; diese zeigt in:
Fig. 1 eine Verdichteranordnung gemäß einer besonders bevorzugten Ausführungsform mit einer axialen Überdeckung der Lager gemäß dem ersten Aspekt,
Fig. 2A - 2C unterschiedliche Anordnungen von Antriebslager und Pleuellager zum Erreichen verschiedener axialer Überdeckungen der Lager gemäß dem ersten Aspekt,
Fig. 3A ein Teilsystem bewegter Massen mit Pleuel, Verdichterkolben, Pleuellager und einem Pleuelausgleichsgewicht gemäß dem zweiten Aspekt,
Fig. 3B ein aus Teilsystem und Kurbelscheibe bestehendes, ausgewuchtetes Gesamtsystem gemäß dem zweiten Aspekt,
Fig. 4 eine Ansicht eines Antriebs mit einem Antriebsgehäuse gemäß einer bevorzugten Weiterbildung der Erfindung,
Fig. 5A, 5B jeweils eine Schnittansicht des Kurbelscheibe, Pleuel, Pleuellager und Verdichterkolben aufweisenden Massensystems zur Darstellung von Ausführungsformen eines Anlaufschutzes gemäß einer bevorzugten Weiterbildung der Erfindung
Fig. 6 eine stark vereinfachte, schematische Übersicht einer Druckluftversorgungsanlage,
Fig. 7 eine schematische Darstellung eines Fahrzeugs mit einer Druckluftversorgungsanlage,
Fig. 8A-D in stark schematischer Weise beispielhaft verschiedene mögliche Ausführungsformen eines Verdichters gemäß dem Konzept der Erfindung.

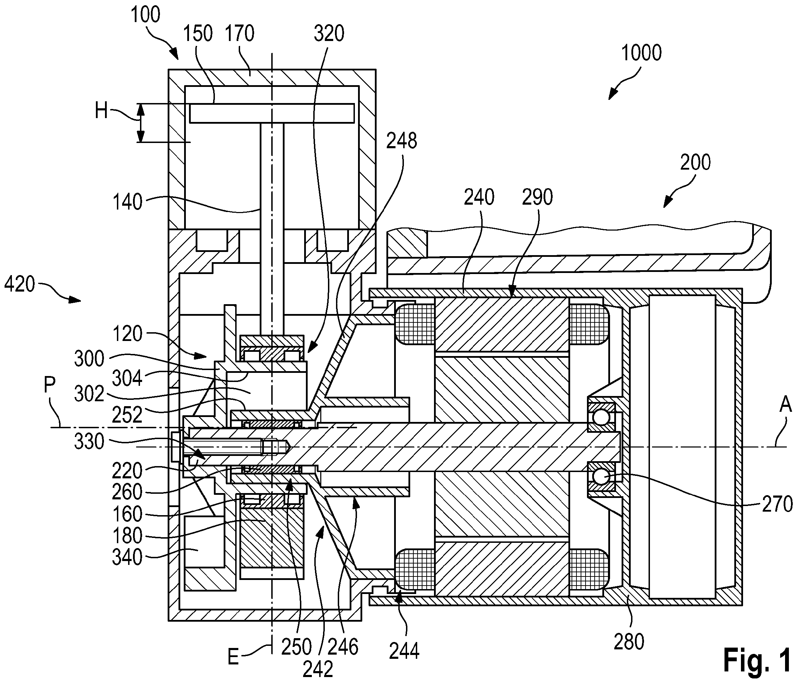

Fig. 1 zeigt eine Verdichteranordnung mit einem Verdichter 100 gemäß einer besonders bevorzugten Ausführungsform der Erfindung. In einem - hier schematisch, d. h. vereinfacht dargestellten - Zylinder 170 wird zwecks Verdichtung von Luft ein Pleuel 140 mit einem - ebenfalls vereinfacht dargestellten - Verdichterkolben 150 oszillierend und praktisch entlang der Symmetrieachse des Zylinders 170 auf- und abwärts bewegt. Vorliegend ist der Verdichterkolben 150 nahe dem oberen Totpunkt, d. h. am oberen Ende des Hubwagens H, dargestellt. Aufgrund der Tatsache, dass es sich bei der hier gezeigten Ausführungsform um einen Taumelkolbenkompressor handelt, das heißt Pleuel 140 und Verdichterkolben 150 starr verbunden sind, ist die oszillierende Bewegung zwar überwiegend, aber nicht vollständig translatorisch. Daher führen Pleuel 140 und Verdichterkolben 150 bei der Auf- und Abwärtsbewegung eine der Kinematik entsprechende, taumelnde Bewegung durch.

Auch wäre jedoch eine Ausführungsform gemäß dem Konzept der Erfindung denkbar, bei dem - wie bei Kolbenverdichtern weithin üblich - Verdichterkolben 150 und Pleuel 140 gelenkig, insbesondere mittels einer Lagerung, verbunden sind. Auch sind neben dem gezeigten einstufigen Kompressor mehrstufige, insbesondere zweistufige Kompressoren gemäß dem Konzept der Erfindung möglich. Derartige mehrstufige Kompressoren können zum einen durch Einkolben-Kompressoren gebildet sein, welche, durch entsprechend abgestufte Kolben und Zylinder oder durch einen mehrseitig druckbeaufschlagbaren Kolben, mehrere Verdichtungskammern bilden. Zum anderen können derartige mehrstufige Kompressoren durch Mehrkolben-Kompressoren gebildet sein, wobei die Menge an Kolben, insbesondere zwei Kolben, derartig angeordnet sind, dass sich die linearen Trägheitskräfte des Massensystems während der Bewegung aufheben. Bei einer Kolbenanzahl größer 1 kann somit die Notwendigkeit für ein Ausgleichsgewicht, insbesondere für ein Kurbelscheiben-Ausgleichsgewicht 340, entfallen.

Das Pleuel 140 weist weiterhin auf seiner dem Verdichterkolben 150 gegenüberliegenden Seite ein Pleuelauge auf, welches zur Aufnahme eines Pleuellagers 160 dient. Das Pleuellager 160 dient weiterhin zur drehbeweglichen Verbindung des Pleuels 140 mit der Kurbelscheibe 300.

Die Kurbelscheibe 300 weist weiterhin einen außenliegenden Pleuel-Aufnahmeabschnitt 320 und einen innenliegenden Antriebswellen-Aufnahmeabschnitt 330 auf. Der außenliegende Pleuel-Aufnahmeabschnitt 320 weist eine zylindrische Außenform auf, welche den Innenring des Pleuellagers 160 aufnimmt. Der innenliegende Antriebswellen-Aufnahmeabschnitt 330 weist eine zylindrische Innenform auf, und dient zur Aufnahme der Antriebswelle 220. Sowohl Pleuellager 160 als auch Antriebslager 260 können an der Kurbelscheibe 300 auf verschiedene Weise befestigt werden. Insbesondere kann diese Befestigung formschlüssig geschehen, beispielsweise durch geeignete Befestigungselemente, kraftschlüssig durch Aufschrumpfen oder durch eine Kombination der vorher genannten oder weiteren Wirkprinzipien.

Zur Erzeugung einer oszillierenden Hubbewegung von Pleuel 140 und Verdichterkolben 150 ist der Pleuel-Aufnahmeabschnitt 320 exzentrisch zur Drehachse A der Antriebswelle angeordnet. Das heißt, dass die auf der Drehachse A liegende Symmetrieachse des Antriebswellen-Aufnahmeabschnitts 330 parallel, aber versetzt zu der auf der Drehachse P des Pleuellagers liegenden Symmetrieachse des Pleuelaufnahme-Abschnittes 320 angeordnet ist.

Die Antriebswelle 220 dient zur Übertragung der von einem Antrieb 200 erzeugten Drehbewegung auf die Kurbelscheibe 300. In der vorliegenden Weiterbildung ist die Antriebswelle 220 mittels eines pleuelseitigen Antriebslagers 260 und eines motorseitigen Antriebswellenlagers 270 in einem Antriebsgehäuse 240 gelagert. Im Rahmen der weiteren Beschreibung wird das pleuelseitige Antriebswellenlager auch als Antriebslager 260 bezeichnet. Vorliegend wird die Antriebswelle 220 über einen Elektromotor 290 angetrieben.

Gemäß dem Konzept der Erfindung und insbesondere zur Anordnung der axialen Mittenebenen von Antriebslager 260 und Pleuellager 160 in einer Lagerebene E, ist das Antriebslager 260 in einem aus dem Antriebsgehäuse 240 auskragenden Flanschbereich 250 angeordnet.

Vorliegend ist der Flanschbereich 250 als Teil des Antriebsgehäusedeckels 242 gebildet. Der Antriebsgehäusedeckel 242 ist in der dargestellten Ausführungsform derartig ausgebildet, dass er mittels eines Klinkenabschnittes 244 in das Antriebsgehäuse 240 eingesetzt, insbesondere formschlüssig zwischen Antriebsgehäuse 240 und Verdichtergehäuse 120 im montierten Zustand gehalten wird.

An den Klinkenabschnitt 244 schließt sich ein vorliegend in Richtung der Lagerebene E sich konisch verjüngender und in den Innenraum des Verdichtergehäuses 120 hineinragender Deckelabschnitt 248 an, welcher insbesondere den radialen Freiraum zwischen Antriebsgehäuse 240 und Antriebswelle 220 verschließt. Weiter axial in Richtung der Lagerebene schließt an den Deckelabschnitt 248 der Flanschbereich 250 an.

Dieser ist ausgebildet, dass er das Antriebslager 260 derart aufnehmen kann, dass die axiale Mittenebene EA des Antriebslagers 260 in der Lagerebene E angeordnet ist und sich somit gemäß dem Konzept der Erfindung in einem praktisch biegemomentfreien Zustand befindet. Weiterhin ist an den Deckelabschnitt in axial entgegengesetzter Richtung, also in den Innenraum des Antriebsgehäuses 240 hinein, ein Rohrabschnitt 246 angeordnet, welcher insbesondere zur weiteren Versteifung und Stabilisierung dient, dies vor allem vor dem Hintergrund der aufzunehmenden Lagerkräfte des Antriebslagers 260 im Betrieb des Verdichters 100.

Auf diese Weise werden auf die Antriebswelle 220 wirkende Biegemomente wesentlich reduziert, bzw. vermieden, da praktisch sämtliche Pleuelkräfte innerhalb der Lagerebene E angreifen und somit praktisch kein Hebelarm für ein auf die Antriebswelle 220 wirkendes Biegemoment entstehen kann. Da sich in dieser Ausführungsform, bedingt durch die Anordnung von Pleuellager 160 und Antriebslager 260 in einer Lagerebene E, die Kurbelscheibe 300 in Bereiche außerhalb der Lagerebene E erstreckt, wirken innerhalb der Kurbelscheibe 300 zwar Momente. Durch eine entsprechend stabile Auslegung der Kurbelscheibe 300 können die Wirkungen dieser Momente, insbesondere Verformungen, auf ein vernachlässigbares Niveau reduziert werden. Der in dieser Ausführungsform noch existierende Hebelarm zwischen Antriebswellen-Aufnahmeabschnitt 330 und axialer Mittenebene des Antriebslagers 260 kann, hinsichtlich der eingangs beschriebenen negativen Wirkung von Biegemomenten auf die Antriebswelle, in dieser Ausführungsform vernachlässigt werden.

Alternativ könnte der Antriebswellen-Aufnahmeabschnitt 330 in axialer Richtung in Richtung des Antriebslagers 260 erweitert werden, so dass er sich bis unter den Innenring des Antriebslagers 260 erstreckt. In diesem Falle würde der Innenring des Antriebslagers 260 auf einer rohrförmigen Erweiterung der Kurbelscheibe 300 sitzen, und sämtliche Biegemomente außerhalb der Lagerebene E würden vollständig von der Kurbelscheibe 300 aufgenommen. Die Antriebswelle 220 wäre somit vollständig von durch Pleuelkräfte hervorgerufenen Biegemomenten entlastet.

Fig. 2A - Fig. 2C zeigen unterschiedliche Anordnungen von Antriebslager und Pleuellager gemäß dem Konzept der Erfindung. In Fig. 2A sind zur Übersicht wesentliche Abstände und Maße der Lageranordnung dargestellt.

Gemäß dem Konzept der Erfindung sind Pleuellager 160 und Antriebslager 260 derart angeordnet, dass sich das Antriebslager 260 in radialer Richtung innerhalb des Pleuellagers 160 befindet. Dies bedeutet, dass sich der Außendurchmesser DAA des Antriebslagers 260 - in einer Projektionsebene senkrecht zur Drehachse A betrachtet - vollständig innerhalb des Innendurchmessers DIP des Pleuellagers 160 befindet. Dabei kann der Außendurchmesser DAA des Antriebslagers 260, wie in den vorliegenden Weiterbildungen gezeigt, durchaus kleiner sein als der Innendurchmesser DIP des Pleuellagers 160.

Weiterhin weist das Pleuellager 160 einen Außendurchmesser DAP auf, der zur Herstellung einer geeigneten Passung mit dem Pleuelauge des Pleuels 140 ausgebildet ist. Auch der Innendurchmesser DIA des Antriebslagers 260 ist derartig ausgebildet dass er einen Sitz auf der Antriebswelle 220 gemäß der Konstruktion der Weiterbildung ermöglicht.

Das Pleuellager 160 weist eine Breite BP in axialer Richtung auf. Das Antriebslager 260 weist eine Breite BA in axialer Richtung auf. Das Pleuellager 160 weist weiterhin einen Pleuellager-Innenraum 190 auf. Dieser Pleuellager-Innenraum 190 entspricht einem zylindrischen Hohlraum mit dem radialen Durchmesser DIP und der axialen Breite BP.

Der Abstand SR bezeichnet den radialen Abstand zwischen der Drehachse P des Pleuellagers 160 und der parallel dazu verlaufenden Drehachse A des Antriebslagers 260. Dieser Abstand SR ist somit ein Maß für die Exzentrizität der Kurbelscheibe 300 und definiert gleichzeitig den Hubweg H des Verdichterkolben 150. Der Zusammenhang zwischen Hubweg H und Abstand SR lautet praktisch wie folgt: H = 2*SR.

In Fig. 2A ist eine Weiterbildung dargestellt, in der sich Pleuellager 160 und Antriebslager 260 teilweise überdecken. Dies bedeutet, dass das Antriebslager 260 in axialer Richtung derartig entlang der Drehachse A in Richtung des Pleuellagers 160 verschoben ist, dass es sich teilweise innerhalb des Pleuellager-Innenraums 190 befindet. Diese Verschiebung --vorliegend in Richtung des Antriebs 200 gemäß der Fig.1 (in der Fig.2A, Fig.2B nach rechts)-- wird beschrieben durch einen axialen Abstand SA zwischen der axialen Mittenebene EP des Pleuellagers 160 und der axialen Mittenebene EA des Antriebslagers 260. Diese Verschiebung kann in einer alternativen Abwandlung auch in Richtung weg vom Antrieb 200 gemäß der Fig.1 umgesetzt werden (in der Fig.2A, Fig.2B wäre das dann nach links).

Je größer der axiale Abstand SA gewählt wird, desto größer sind die auf die Antriebswelle 220 wirkenden und durch Pleuelkräfte hervorgerufenen Biegemomente, welche gemäß dem Konzept der Erfindung vermindert bzw. vermieden werden sollen.

Als Überdeckung UD wird hier derjenige axiale Abstand bezeichnet, mit dem das Antriebslager 260 in den Pleuellager-Innenraum 190 hineinragt. Die Überdeckung UD ergibt sich, wie in Fig. 2A ersichtlich, aus der Breite BP des Pleuellagers 160, der Breite BA des Antriebslagers 260 und dem axialen Abstand SA.

In der in Fig. 2A dargestellten Weiterbildung ist die Überdeckung UD vergleichsweise gering, insbesondere ragt das Antriebslager 260 weniger mit einem Abstand UD in den Pleuellager-Innenraum 190 hinein, der geringer ist als die Hälfte seiner axialen Breite BA. Dieser Fall lässt sich durch folgenden Zusammenhang ausdrücken: UD < 0,5*BA.

Das Konzept der Erfindung kann -jedenfalls grundsätzlich, wenn auch nicht bevorzugt-- in einer anderen hier nicht gezeigten Ausführungsform realisiert werden wenn keine Überdeckung stattfindet. Es zeigt sich, dass dies jedenfalls in der hier nicht gezeigten Ausführungsform hinnehmbar wäre solange der axiale Abstand SA ausreichend gering ist, um einen Hebelarm für auf die Antriebswelle 220 wirkende und durch Pleuelkräfte hervorgerufene Biegemomente zu vermeiden. Als Richtwert für einen maximalen axialen Abstand SA wird der Wert SA = BP + BA angesehen.

In Fig. 2B ist eine weitere mögliche Anordnung von Pleuellager 160 und Antriebslager 260 dargestellt. Hierbei ist wesentlich, dass die Überdeckung UD' größer ist als die Überdeckung UD der in Fig. 2A dargestellten Weiterbildung. Das Antriebslager 260 ragt mit einer Überdeckung UD' in den Pleuellager-Innenraum 190 hinein, die größer ist als die Hälfte der axialen Breite BA des Antriebslagers 260. Dieser Fall der überwiegenden Überdeckung lässt sich durch folgenden Zusammenhang ausdrücken: 0,5*BA < UD < BA.

Für die hier dargestellte Weiterbildung gilt ebenfalls, dass der axialer Abstand SA im Vergleich zu der in Fig. 2A dargestellten Weiterbildung, verkleinert ist. Dies hat vorteilhaft zur Folge, dass der Hebelarm für auf die Antriebswelle 220 und durch Pleuelkräfte verursachte Biegemomente, gemäß dem Konzept der Erfindung ebenfalls verkleinert ist.

Fig. 2C zeigt schließlich eine dritte mögliche Lageranordnung, bei der besonders vorteilhaft die axiale Mittenebene EP des Pleuellagers 160 und die axiale Mittenebene EA des Antriebslagers 260 in einer Lagerebene E zusammenfallen. Dies bedeutet, dass der axialer Abstand SA gleich null ist und somit praktisch kein Hebelarm für aus dem Pleuel 140 in die Antriebswelle 220 geleitete Kräfte besteht. Auf diese Weise wird besonders vorteilhaft gemäß dem Konzept der Erfindung eine Entstehung von Biegemomenten vermieden. Die Tatsache, dass das Antriebslager 260 in axialer Richtung derart angeordnet ist, dass es sich vollständig im Pleuellager-Innenraum 190 befindet, führt zu einer vollständigen Überdeckung UD", das heißt: UD" = BA.

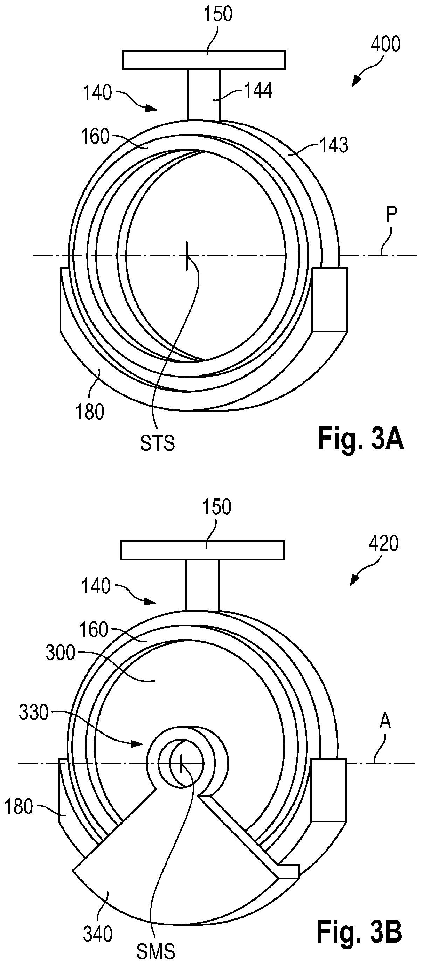

Weiterhin sind in dieser Ausführungsform gemäß dem Konzept der Erfindung Ausgleichsgewichte 180, 340 zum Auswuchten eines Massensystems 420, sowohl an Pleuel 140 als auch an Kurbelscheibe 300 angeordnet, wie in Fig. 3A und Fig. 3B im Folgenden schematisch dargestellt. An dem Pleuel 140 ist zu diesem Zweck ein Pleuelausgleichsgewicht 180 angeordnet. An der Kurbelscheibe 300 ist weiterhin ein Kurbelscheiben-Ausgleichsgewicht 340 angeordnet. Das Pleuel 140 weist einen Pleuelring 143 und eine an den Pleuelring 143 angeschlossene, insbesondere starr verbundene, Pleuelstange 144 auf.

Insbesondere ist es vorteilhaft, das Auswuchten des Gesamtsystems in zwei Schritten vorzunehmen. In einem ersten Schritt ist sicherzustellen, und dies insbesondere durch die konstruktive Auslegung, dass sich der Schwerpunkt STS eines aus Pleuel 140, Verdichterkolben 150, Pleuellager 160 sowie sämtlicher weiterer benötigter Befestigungselemente bestehenden Teilsystems 400, auf der Drehachse P des Pleuellagers befindet. Dieses Teilsystem 400 ist in Fig. 3A dargestellt. Um den Schwerpunkt STS entsprechend auf die Drehachse P zu verlagern, wird insbesondere ein Pleuelausgleichsgewicht 180, insbesondere an der dem Verdichterkolben 150 abgewandten Seite des Pleuels 140 angeordnet.

In einem zweiten Schritt wird dann, insbesondere durch konstruktive Auslegung bzw. Anordnung der Komponenten, das als Massensystem 420 bezeichnete Gesamtsystem bewegter Massen, bestehend aus dem Teilsystem 400 und weiterhin der Kurbelscheibe 300 einschließlich sämtlicher benötigter Befestigungselemente, derartig angeordnet, dass ein Schwerpunkt SMS des Massensystems 420 auf der Drehachse A der Antriebswelle 220 liegt. Das Massensystem 420 ist in Fig. 3B dargestellt.

Hierzu wird insbesondere ein Kurbelscheiben-Ausgleichsgewicht 340 an der Kurbelscheibe 300 angeordnet.

Auf diese Weise und insbesondere durch den aus Einsatz der Ausgleichsgewichte 180, 340 wird sichergestellt, dass sich sämtliche durch die Bewegungen bzw. Beschleunigungen entstehenden Kräfte innerhalb des Gesamtsystems 420 praktisch ausgeglichen werden. Auf diese Weise wird gemäß dem Konzept der Erfindung ein geräusch- und vibrationsarmer Betrieb der Verdichteranordnung 1000 ermöglicht.

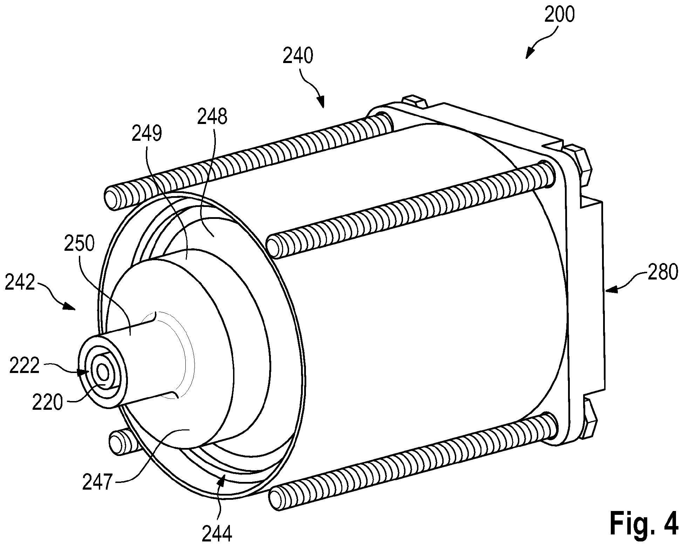

Fig. 4 zeigt eine Ansicht eines Antriebs 200 mit einem Antriebsgehäuse 240 gemäß einer bevorzugten Weiterbildung der Erfindung. Sichtbar ist ein Antriebsgehäusedeckel 242, welcher das Antriebsgehäuse 240 abschließt. Der Antriebsgehäusedeckel 242 weist wiederum einen Flanschbereich 250 auf, welcher, hier nicht sichtbar, im Innern ein Antriebslager 260 aufnehmen kann. Sichtbar ist ein aus der seitlichen Öffnung des Flanschbereiches 250 herausragender Endabschnitt 222 der Antriebswelle 220. Dieser Endabschnitt 222 ist ausgebildet zur Aufnahme einer, hier ebenfalls nicht gezeigten, Kurbelscheibe 300. Zu diesem Zwecke ist es möglich, dass der Endabschnitt 222, noch weiter als hier gezeigt, seitlich aus dem Flanschbereich 250 hinausragt. Vorliegend ist der Endabschnitt 222 zylindrisch ausgebildet, was eine Befestigung der Kurbelscheibe 300 an der Antriebswelle 220 insbesondere mittels einer Presspassung ermöglicht. Gleichwohl ist es möglich andere im Stand der Technik verwendete Möglichkeiten der Welle-Nabe-Verbindungen einzusetzen, um die Kurbelscheibe 300 an der Antriebswelle 220 zu befestigen. Insbesondere wäre die Befestigung mittels eines Kegelsitzes bzw. einer Kegelpassung denkbar. Hierzu müsste der Endabschnitt 222 jedoch konisch, d. h. sich zu dem aus dem Gehäuse 240 hinausragenden Ende der Antriebswelle 220 verjüngend, ausgebildet sein. Auf diese Weise könnte die Kurbelscheibe 300, welche entsprechend eine zu dem konischen Endabschnitt 220 passende, ebenfalls konische Hohlaufnahme aufweist, auf den Endabschnitt 220 aufgesetzt werden und axial fixiert werden.

Der Antriebsgehäusedeckel 242 weist weiterhin, dem Flanschbereich 250 in Richtung des Antriebsgehäuses 240 folgend, einen Ringflansch 247 auf. Dieser Ringflansch 247 erstreckt sich in radialer Richtung und vergrößert so den Durchmesser des Antriebsgehäusedeckels 242 vom Durchmesser des Flanschabschnittes 250 auf einen größeren Durchmesser eines Absatzabschnittes 249. An den Absatzabschnitt 249 schließt sich, wieder in axialer Richtung dem Antriebsgehäusedeckel 242 in Richtung des Antriebsgehäuses 240 folgend, ein chronisch geformter Deckelabschnitt 248 an, wir in ähnlicher Form bereits in Fig. 1 dargestellt ist. Weiter in dieselbe Richtung folgend schließt sich an den Deckelabschnitt 248 ein Klinkenabschnitt 244 an, welcher den Abschluss des Antriebsgehäusedeckels 242 darstellt und, analog zu den Fig. 1 gezeigten Ausführung, die Verbindung des Antriebsgehäusedeckels 242 mit dem Antriebsgehäuse 240 darstellt.

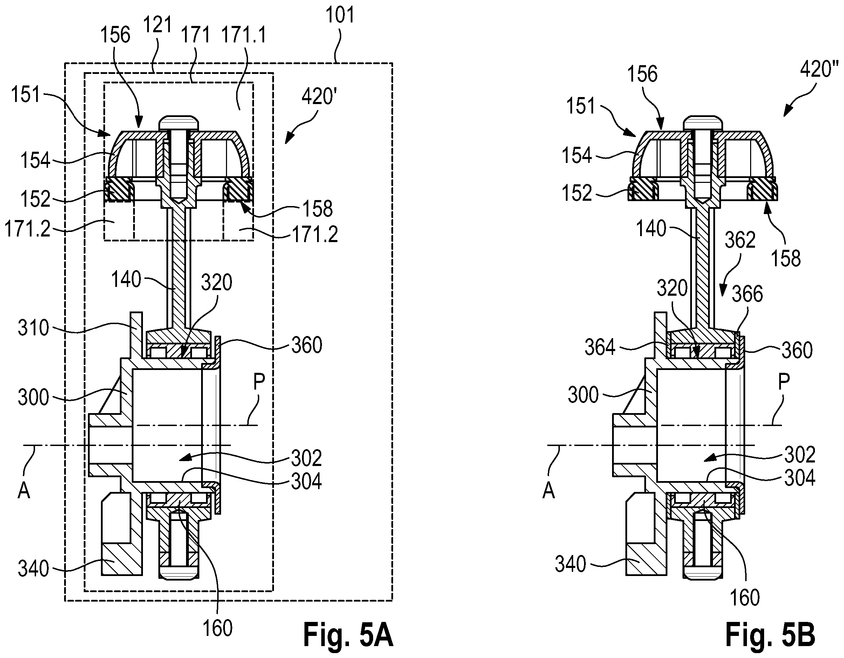

Fig. 5A, 5B jeweils eine Schnittansicht eines Kurbelscheibe, Pleuel, Pleuellager und Verdichterkolben aufweisenden Massensystems zur Darstellung von Ausführungsformen eines Anlaufschutzes gemäß einer bevorzugten Weiterbildung der Erfindung.

Fig. 5A zeigt eine weitere bevorzugte Ausführungsform mit einem - hier stark vereinfacht dargestellt - zweistufigen Verdichter 101, der weiterhin ein Verdichtergehäuse 121 sowie einen Zylinder 171 mit einer ersten Verdichtungskammer 171.1 und einer zweiten Verdichtungskammer 171.2, aufweist. Weiterhin dargestellt ist insbesondere die Schnittansicht eines Massensystems 420', welches eine Kurbelscheibe 300 mit Kurbelscheiben-Ausgleichsgewicht 340, ein Pleuel 140, ein Pleuellager 160 und einen Verdichterkolben 151 aufweist. Vorliegend ist der Verdichterkolben 151 beidseitig druckbeaufschlagbar ausgebildet. Hierzu weist er eine Vollseite 156 und eine Stufenseite 158 auf, welche mit einem jeweiligen Zylinderabschnitt die erste Verdichtungskammer 171.1 und die zweite Verdichtungskammer 171.2, bilden. An einen Kuppelabschnitt 154, der hohl ausgebildet ist und an das Pleuel 140 befestigt ist, ist eine Dichtungsstufe 152 angeschlossen, welche sowohl in radial innere, als auch radial äußere Richtung mit einem hier stark vereinfacht dargestellten, ringförmigen Zylinderraum abdichtet und somit die zweite Verdichtungskammer 171.2 bildet.

Das Pleuel 140, ist mittels eines Pleuellagers 160, welches wiederum auf einem Pleuel-Aufnahmeabschnitt 320 angeordnet ist, drehbeweglich mit der Kurbelscheibe 300 verbunden. Vorliegend ist das Pleuellager 160 als einreihiges Nadellager ausgeführt. Ein flanschförmiger Anlaufschutz 360 ist an die Kurbelscheibe 300 derart befestigt, dass er den axialen Bewegungsraum des Pleuellagers 160 einschränkt. Der axiale Bewegungsraum des Pleuellagers 160 ist somit zwischen einem Kurbel-Flanschabschnitt 310 und dem Anlaufschutz 360 begrenzt. Dies führt zu dem Vorteil, dass eine Selbstzentrierung des Pleuellagers 160 durch diesen axialen Freiheitsgrad erfolgen kann, insbesondere so keine Zwangslagerung erfolgt.

Der Anlaufschutz 360 kann mittels der gängigen Methoden der Konstruktionslehre an der Kurbelscheibe, insbesondere wiederlösbar, befestigt sein. Hierzu kommt beispielsweise eine Gewindeverbindung zwischen einem auf die Mantelfläche des Anlaufschutzes 360 eingearbeiteten Gewindes und eines dazu passenden, in die Innenseite 304 der topfartigen Ausnehmung 302 eingearbeiteten Gewindes in Frage. Gleichwohl ist es möglich, den Anlaufschutz 360 mittels Kleben oder Aufschrumpfen mit der Kurbelscheibe 300 zu verbinden.

Die in Fig. 5B dargestellte Weiterbildung eines Massensystems 420" ist ähnlich zu dem in Fig. 5A gezeigten Massensystem 420', jedoch mit dem Unterschied, dass zwischen Kurbel-Flanschabschnitt 310 und Anlaufschutz 360 eine aus einer ersten Ringscheibe 364 und einer zweiten Ringscheibe 366 bestehender Begrenzungsschutz 362 angeordnet sind. Hierbei ist die erste Ringscheibe 364 im axialen Zwischenraum, der sich zwischen dem Kurbel-Flanschabschnitt 310 und dem Pleuel 140 bzw. dem Pleuellager 160 ergibt, angeordnet. Die zweite Ringscheibe 366 ist in dem axialen Zwischenraum, welcher sich zwischen dem Pleuel 140 bzw. dem Pleuellager 160 und dem Anlaufschutz 360 ergibt, angeordnet. Durch den aus der ersten Ringscheibe 364 und der zweiten Ringscheibe 366 bestehenden Begrenzungsschutz 362 kann in vorteilhafter Weise die Reibung zwischen den in Relativbewegung zueinander stehenden Komponenten vermindert werden. Hierzu können der Begrenzungsschutz 362 bzw. die Ringscheiben 364, 366 aus einem reibungsarmen Material, insbesondere PTFE, ausgebildet sein. Auch ist es möglich, dass die Ringscheiben 364, 366, oder auch der Anlaufschutz 360, aus glasfaserverstärktem Kunststoff ausgebildet sind.

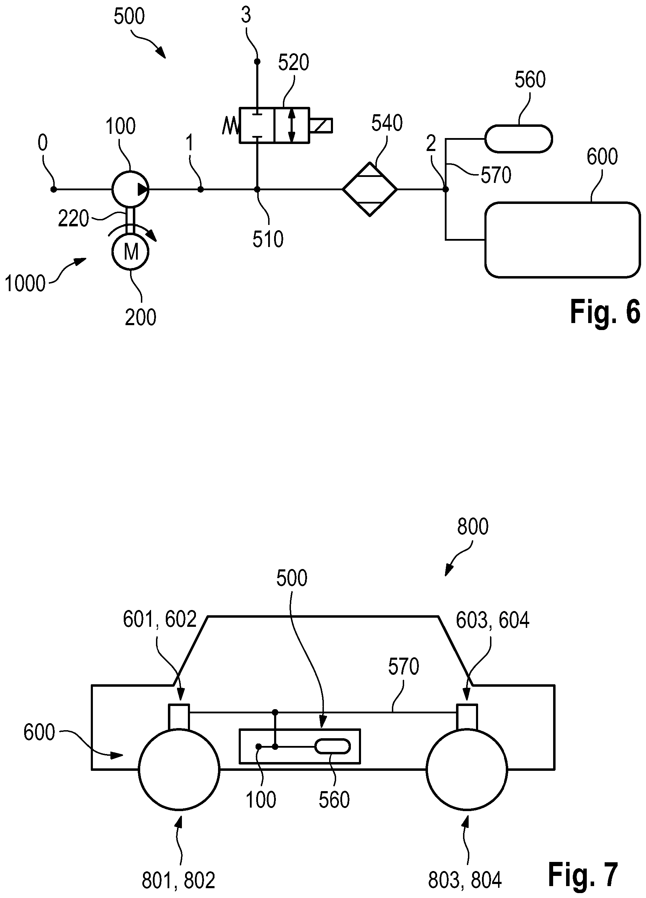

Fig. 6 zeigt eine stark vereinfachte, schematische Übersicht einer Druckluftversorgungsanlage 500 mit einer Verdichteranordnung 1000 gemäß dem Konzept der Erfindung zur Versorgung einer Pneumatikanlage 600. Die Druckluftversorgungsanlage 500 weist eine Luftansaugung 0 zum Ansaugen von Frischluft auf, die weiterhin mit einem Einlass des Verdichters 100 fluidführend, insbesondere gasführend, verbunden ist. Der Verdichter 100 wird als Teil der Verdichteranordnung 1000 von einem Antrieb 200 über eine Antriebswelle 220 angetrieben. Die verdichtete Frischluft wird weiterhin über eine Druckluftquelle 1 bereitgestellt, an welche sich eine Abzweigung 510 anschließt. An diese Abzweigung 510 ist zum einen, über ein Entlüftungsventil 520, eine Entlüftung 3 angeschlossen. Zum anderen ist an die Abzweigung 510 ein Lufttrockner 520 angeschlossen, der weiterhin zu einem Druckluftanschluss 2 führt. An diesen sind weiterhin über eine Galerie 570 ein Druckluftspeicher 560 und die Pneumatikanlage 600 angeschlossen. Die Pneumatikanlage 600 kann beispielsweise eine Luftfederanlage, oder eine weitere pneumatische Anlage, insbesondere eine Fahrzeugs, sein. Weiterhin sind einzelne Ventile, Drosseln und dergleichen Stellmittel sowie einzelne Komponenten, insbesondere der Pneumatikanlage, in dieser Darstellung aus Gründen der Übersicht und Vereinfachung nicht dargestellt.

Fig. 7 zeigt eine schematische Darstellung eines Fahrzeugs 800 -vorliegend in Form eines PKW-- mit einer Druckluftversorgungsanlage 500 und einer Pneumatikanlage 600. Bei Fahrzeugen im PKW-Bereich ist ein geräusch- und vibrationsarmer Betrieb von großer Bedeutung, da hier, im Unterschied zu Anwendungen im LKW-Bereich, die Akustikanforderungen höher bzw. sensibler sind. Das hier deswegen, ohne Einschränkung der Anwendbarkeit auch für LKW'S oder andere Nutzfahrzeuge, beispielhaft dargestellte PKW-Fahrzeug 800 verfügt über vier Räder 801, 802, 803 und 804, von denen hier aufgrund der Schnittdarstellung die zwei jeweils vorderen Räder gezeigt sind. Analog zur Anzahl der Räder verfügt die Pneumatikanlage 600 über vier Luftfedern 601, 602, 603 und 604, von denen hier analog zu den Rädern aufgrund der Schnittdarstellung die zwei jeweils vorderen Luftfedern gezeigt sind. Die Luftfedern 601, 602, 603 und 604, die jeweils den Rädern 801, 802, 803 und 804 zugeordnet sind, werden als Teil der Pneumatikanlage 600 von der Druckluftversorgungsanlage 500 mit Druckluft versorgt. Die Druckluftversorgungsanlage 500 ist über die Galerie 570 mit den Komponenten der Pneumatikanlage 600, in diesem Falle den hier dargestellten Luftfedern 601, 602, 603 und 604, fluidführend verbunden.

Die Druckluftversorgungsanlage 500 ist in dieser Darstellung stark vereinfacht zeigt, so dass lediglich der Druckluftspeicher 560 und der Verdichter 100 gemäß dem Konzept der Erfindung sichtbar ist. Der Verdichter 100 gemäß dem Konzept der Erfindung könnt allerdings in einer hier nicht gezeigten Abwandlung zusätzlich oder alternativ unabhängig von der Druckluftversorgungsanlage eingesetzt werden. Das Konzept bietet vorzugsweise die Basis für eine in verbesserter Weise funktionierende, insbesondere vibrations- und geräuscharme Verdichteranordnung. Weiterhin führen eine Reduzierung von Kräften und/oder Momenten sowie insbesondere eine Reduzierung der mit den Kräften und/oder Momenten verbundenen dynamischen Belastungen und Vibrationen, zu einer schonenderen Betriebsweise, welche sich auf Effizienz und Langlebigkeit der Verdichteranordnung positiv auswirken.

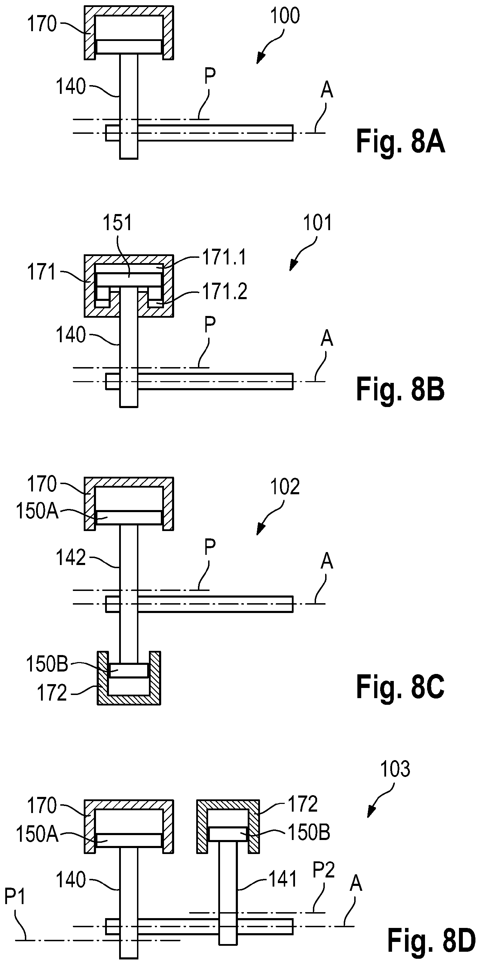

Figuren 8A - 8D zeigen in stark schematischer Weise beispielhaft verschiedene mögliche Ausführungsformen eines Verdichters gemäß dem Konzept der Erfindung. Diese Auswahl an möglichen Bauformen ist nicht als einschränkende bzw. abschließende Aufzählung zu verstehen.

Fig. 8A zeigt einen Verdichter 100, welcher lediglich ein Pleuel 140, einen Verdichterkolben 150 und einen Zylinder 170 aufweist und als einstufiger Verdichter ausgebildet ist.

Fig. 8B zeigt eine weitere Weiterbildung mit einem Verdichter 101, welcher im Wesentlichen den in den Figuren 5A bzw. 5B dargestellten Weiterbildungen entspricht. Hierbei weist der Verdichter 101 ein Pleuel 140 auf. Dieses Pleuel 140 ist mit einem beidseitig druckbeaufschlagbaren Verdichterkolben 151 verbunden, so dass in einem Zylinder 171 zwei Verdichtungskammern, nämlich eine erste Verdichtungskammer 171.1 und eine zweite Verdichtungskammer 171.2 gebildet werden.

Fig. 8C zeigt eine Weiterbildung eines Verdichters 102, in der sowohl ein erster Verdichterkolben 150A als auch ein zweiter Verdichterkolben 150B an einem Pleuel 142 angeordnet sind. Hierbei ist der zweite Verdichterkolben 150B an einem dem ersten Verdichterkolben 150A gegenüberliegenden Ende des Pleuels 140' angeordnet. Somit werden beide Verdichterkolben, nämlich der erste Verdichterkolben 150A und der zweite Verdichterkolben 150B, von nur dem einen Pleuel 140' angetrieben. Auf diese Weise wird ein zweistufiger Verdichter realisiert, nämlich mit einer durch einen ersten Zylinder 170 und den ersten Verdichterkolben 150A gebildeten, ersten Verdichtungsstufe und einer durch einen zweiten Zylinder 172 und den zweiten Verdichterkolben 150B gebildeten zweiten Verdichtungsstufe. Um eine lineare Bewegung der beiden Verdichterkolben 150A, 150B mit einem Pleuel 142 zu erzeugen, wird ein zusätzliches Koppelelement eingesetzt, welches hier nicht näher dargestellt ist. Ein derartiges Koppelelement kann beispielsweise ein Gelenk oder dergleichen aufweisen. Auf diese Weise kann insbesondere die exzentrische Kreisbewegung der Kurbelscheibe in jeweils eine Hubbewegung der jeweiligen Verdichterkolben 150A, 150B umgewandelt werden.

Fig. 8D zeigt eine weitere Ausführungsform eines Verdichters 103. Bei dieser Ausführungsform handelt es sich um einen zweistufigen Verdichter mit einem ersten Pleuel 140 und einem zweiten Pleuel 141.

Das erste Pleuel 140 treibt einen ersten Verdichterkolben 150A an welcher wiederum zusammen mit einem ersten Zylinder 170 eine erste Verdichtungskammer bildet. Analog dazu treibt das zweite Pleuel 141 einen zweiten Verdichterkolben 150B an, welcher zusammen mit einem zweiten Zylinder 172 eine zweite Verdichtungskammer bildet.

Hierbei sind beide Pleuel, nämlich das erste Pleuel 140 und das zweite Pleuel 141, axial versetzt auf einer Antriebswelle 220 angeordnet. Gleichwohl ist es natürlich möglich, beide Pleuel 140,141 in gleicher Weise versetzt auf einer hier nicht dargestellten Kurbelscheibe 300 anzuordnen. Insbesondere kann bei einer derartigen Weiterbildung erreicht werden, dass für jedes Pleuel 140, 141 durch eine separate exzentrische Anordnung eine separate Pleuelachse, und somit ein separater Hub, eingestellt werden kann. Vorliegend weist das Pleuel 140 somit eine Pleuelachse P1 auf, welche von der Pleuelachse P2 des zweiten Pleuels 141 verschieden ist. Folglich können der Verdichterkolben 150A und der Verdichterkolben 150B mit verschiedenen Hubwegen bewegt werden. Es ist jedoch auch möglich, beide Pleuel 140, 141 nebeneinander auf einem Exzenterabschnitt anzuordnen, sodass beide Pleuel 140, 141 eine gemeinsame Pleuelachse P aufweisen.

### Bezugszeichenliste (Teil der Beschreibung)

- 0: Luftansaugung
- 1: Druckluftquelle
- 2: Druckluftanschluss
- 3: Entlüftung
- 100, 101, 102, 103: Verdichter
- 120, 121: Verdichtergehäuse
- 140, 141, 142: Pleuel
- 143: Pleuelring
- 144: Pleuelstange
- 150, 150A, 150B, 151: Verdichterkolben
- 152: Dichtungsstufe
- 154: Kuppelabschnitt
- 156: Vollseite des Verdichterkolben
- 158: Stufenseite des Verdichterkolben
- 160: Pleuellager
- 170. 171, 172: Zylinder
- 171.1: Erste Verdichtungsstufe
- 171.2: Zweite Verdichtungsstufe
- 180: Pleuelausgleichsgewicht
- 190: Pleuellager-Innenraum
- 200: Antrieb
- 220: Antriebswelle
- 222: Endabschnitt der Antriebswelle
- 240: Antriebsgehäuse
- 242: Antriebsgehäusedeckel
- 244: Klinkenabschnitt
- 246: Rohrabschnitt
- 247: Ringflansch
- 248: Deckelabschnitt
- 249: Absatzabschnitt
- 250: Flanschbereich
- 252: Außenseite des Flanschbereichs
- 260: Antriebslager, Pleuelseitiges Antriebswellenlager
- 270: Motorseitiges Antriebswellenlager
- 280: Antriebsgehäuseboden
- 290: Elektromotor
- 300: Kurbelscheibe
- 302: Topfartige Ausnehmung der Kurbelscheibe
- 304: Innenseite der topfartigen Ausnehmung
- 310: Kurbel-Flanschabschnitt
- 320: Pleuel-Aufnahmeabschnitt
- 330: Antriebswellen-Aufnahmeabschnitt
- 340: Kurbelscheiben-Ausgleichsgewicht
- 360: Anlaufschutz
- 362: Begrenzungsschutz
- 364: Erste Ringscheibe
- 366: Zweite Ringscheibe
- 400: Teilsystem bewegter Massen
- 420: Massensystem
- 500: Druckluftversorgungsanlage
- 510: Abzweigung
- 520: Entlüftungsventil
- 540: Lufttrockner
- 560: Druckluftspeicher
- 600: Pneumatikanlage
- 601, 602, 603, 604: Luftfeder
- 800: Fahrzeug
- 801, 802, 803, 804: Rad
- 1000: Verdichteranordnung

- A: Drehachse der Antriebswelle
- BA: Antriebslager-Breite
- BP: Pleuellager-Breite
- DAA: Antriebslager-Au ßendurchmesser
- DIA: Antriebslager-Innendurchmesser
- DAP: Pleuellager-Außendurchmesser
- DIP: Pleuellager-Innendurchmesser
- E: Lagerebene
- EA: Axiale Mittenebene des Antriebslagers
- EP: Axiale Mittenebene des Pleuellagers
- H: Hubweg des Verdichterkolben
- P, P1, P2: Drehachse des Pleuellagers
- SA: Axialer Abstand von EA und EP
- SMS: Schwerpunkt des Massensystems
- SR: Radialer Abstand von A und P
- STS: Schwerpunkt des Teilsystems
- UD, UD', UD": Überdeckung

## Patentansprüche

1. Verdichteranordnung (1000) für eine Druckluftzuführung einer Druckluftversorgungsanlage, zum Betreiben einer Pneumatikanlage, aufweisend:
- einen Verdichter (100, 101, 102, 103), insbesondere Kompressor, mit mindestens einem Pleuel (140, 141, 142), einem Pleuellager (160) und einem Zylinder (170, 171), wobei das Pleuel einen Verdichterkolben (150, 150A, 150B, 151) aufweist,
- einen Antrieb (200) mit einer Antriebswelle (220), einem Antriebsgehäuse (240), wobei die Antriebswelle (220) in mindestens einem innerhalb des Antriebsgehäuses (240) angeordneten Antriebslager (260) gelagert ist,
**dadurch gekennzeichnet, dass**
- sich das Antriebslager (260) und das Pleuellager (160) in axialer Richtung teilweise oder vollständig überdecken, oder die axiale Mittenebene (EA) von Antriebslager (260) und die axiale Mittenebene (EP) des Pleuellagers (160) in einer Lagerebene (E) liegen, und wobei
- eine Kurbelscheibe (300) fest mit einem Endabschnitt (222) der Antriebswelle (220) verbunden ist, und weiterhin die Kurbelscheibe (300) an einem exzentrisch zur Antriebswelle (220) angeordneten Pleuel-Aufnahmeabschnitt (320) über das Pleuellager (160) drehbeweglich mit dem Pleuel (140) verbunden ist.

2. Verdichteranordnung (1000) nach Anspruch 1, **dadurch gekennzeichnet, dass** die Kurbelscheibe (300), das Antriebslager (260) und das Pleuellager (160) derartig angeordnet sind, dass sich das Antriebslager (260) in radialer Richtung zumindest teilweise innerhalb des Pleuellagers (160) befindet.

3. Verdichteranordnung (1000) nach Anspruch 1 oder 2, **dadurch gekennzeichnet, dass** ein Flanschbereich (250) zur Aufnahme des Antriebslagers (260) als Teil eines an dem Antriebsgehäuse (240) ausgebildeten Antriebsgehäusedeckels (242) gebildet ist und das Antriebslager (260) innerhalb des Flanschbereiches (250) befestigt ist.

4. Verdichteranordnung (1000) nach einem der vorhergehenden Ansprüche, **dadurch gekennzeichnet, dass** das Antriebsgehäuse (240) einen Motor, insbesondere Elektromotor (290), umfasst und pleuelseitig mittels dem Antriebsgehäusedeckel (242) abgedeckt ist, wobei sich der Antriebsgehäusedeckel (242) pleuelseitig zu dem Flanschbereich (250) verjüngt, insbesondere konisch verjüngt.

5. Verdichteranordnung (1000) nach einem der vorhergehenden Ansprüche, **dadurch gekennzeichnet, dass** das Antriebslager (260) innerhalb des Flanschbereiches (250), insbesondere kraftschlüssig, insbesondere durch eine Presspassung, befestigt ist.

6. Verdichteranordnung (1000) nach einem der vorhergehenden Ansprüche, **dadurch gekennzeichnet, dass** der Flanschbereich (250) zur innenseitigen Aufnahme des Antriebslagers (260) ausgebildet ist und in die Kurbelscheibe (300) hineinragt.

7. Verdichteranordnung (1000) nach einem der vorhergehenden Ansprüche, **dadurch gekennzeichnet, dass** die Kurbelscheibe (300) mit einer innenseitig des Pleuel-Aufnahmeabschnitts (320) liegenden, zum Antriebsgehäusedeckel (242) offenen topfartigen Ausnehmung (302) der Kurbelscheibe (300) den Flanschbereich (250) umgreift.

8. Verdichteranordnung (1000) nach Anspruch 7, **dadurch gekennzeichnet, dass** die topfartige Ausnehmung (302) der Kurbelscheibe (300) an dem Flanschbereich (250) liegt, nämlich eine Außenseite (252) des Flanschbereichs (250) und eine Innenseite (304) der topfartigen Ausnehmung (302), sich radial gegenüberliegen und/oder führen.

9. Verdichteranordnung (1000) nach einem der vorhergehenden Ansprüche, **dadurch gekennzeichnet, dass** die Kurbelscheibe (300) fest über einen Kegelsitz der Kurbelscheibe (300) auf dem Endabschnitt (222) der Antriebswelle (220) kraftschlüssig, insbesondere reibschlüssig, verbunden ist, und /oder Kurbelscheibe (300) fest über eine Presspassung auf dem Endabschnitt (222) der Antriebswelle (220) sitzt.

10. Verdichteranordnung (1000) nach einem der vorherigen Ansprüche, **dadurch gekennzeichnet, dass** die Antriebswelle (220) mittels des pleuelseitigen Antriebslagers (260) innerhalb des Antriebsgehäuses (240), insbesondere am Flanschbereich (250), und eines motorseitig gegenüberliegendem Antriebswellenlagers (270), insbesondere an einem Antriebsgehäuseboden (280), gelagert ist.

11. Verdichteranordnung (1000) nach einem der vorherigen Ansprüche, **dadurch gekennzeichnet, dass** ein Pleuelausgleichsgewicht (180) am Pleuel (140, 141, 142) angeordnet ist, insbesondere an einer dem Verdichterkolben (150, 151) abgewandten Seite des Pleuels (140, 141).

12. Verdichteranordnung (1000) nach einem der vorherigen Ansprüche, **dadurch gekennzeichnet, dass** das Pleuel (140) einen Pleuelring (143) und eine Pleuelstange (144) aufweist, wobei das Pleuelausgleichsgewicht (180) am Pleuelring (143) angeordnet ist, derart, dass sich der Schwerpunkt (STS) eines im Wesentlichen das Pleuel (140), das Pleuellager (160) und den Verdichterkolben (150) aufweisenden Teilsystems (400), mittels der Anordnung des Pleuelausgleichsgewichts (180) am Pleuel (140) auf der Drehachse (P) des Pleuellagers (160) befindet.

13. Verdichteranordnung (1000) nach einem der vorherigen Ansprüche, **dadurch gekennzeichnet, dass** ein Kurbelscheiben-Ausgleichsgewicht (340) mit der Kurbelscheibe (300) drehbar fest an der Kurbelscheibe (300) angeordnet ist, insbesondere derart, dass es an einer dem Verdichterkolben (150) abgewandten Seite der Kurbelscheibe (300) befindlich ist wenn der Verdichterkolben (150) in einer oberen Position seines Hubweges (H) ist.

14. Verdichteranordnung (1000) nach einem der vorherigen Ansprüche, **dadurch gekennzeichnet, dass** das Kurbelscheiben-Ausgleichsgewicht (340) an der Kurbelscheibe (300) derart angeordnet ist, dass sich ein Schwerpunkt (SMS) eines Massensystems (420), mittels der Anordnung des Kurbelscheiben-Ausgleichsgewichts (340), in der Drehachse (A) der Antriebswelle (220) befindet, wobei das Massensystem (420) im Wesentlichen das aus Pleuel (140), Pleuellager (160) und Verdichterkolben (150) bestehende Teilsystem (400) sowie die Kurbelscheibe (300) und gegebenenfalls Befestigungselemente zur Fixierung des Pleuellagers (160) oder weiterer Bestandteile des Systems, aufweist.

15. Verdichteranordnung (1000) nach einem der vorherigen Ansprüche, **dadurch gekennzeichnet, dass** das Pleuel (140) und der Verdichterkolben (150, 151) starr miteinander verbunden sind, insbesondere der Verdichter (100, 101) als Taumelkolbenkompressor ausgebildet ist.

16. Verdichteranordnung (1000) nach einem der vorherigen Ansprüche, **dadurch gekennzeichnet, dass** der Verdichter (100, 101) als einstufiger Verdichter (100) oder als mehrstufiger Verdichter, insbesondere zweistufiger Verdichter (101), ausgebildet ist und/oder der Verdichter (100, 101) genau ein Pleuel (140, 142) oder mehrere, insbesondere ein erstes Pleuel (140) und ein zweites Pleuel (141), aufweist.

17. Verdichteranordnung (1000) nach einem der vorherigen Ansprüche, **dadurch gekennzeichnet, dass** das Pleuellager (160) als ein Wälzlager, insbesondere ein Kugellager, Nadellager, Zylinderrollenlager, Tonnenlager oder dergleichen Wälzlager gebildet ist und/oder das Antriebslager (260) als ein Gleitlager oder Nadellager gebildet ist.

18. Verdichteranordnung (1000) nach einem der vorherigen Ansprüche, **dadurch gekennzeichnet, dass** wenigstens der Pleuelring (143) auf der Seite der Kurbelscheibe (300) und/oder auf der Seite des zum Antriebsgehäusedeckels (242) mittels eines Anlaufschutzes (360) in einer axialen Bewegungsrichtung, insbesondere in Richtung der Drehachse (P) des Pleuellagers (160), begrenzt ist.

19. Verdichteranordnung (1000) nach einem der vorherigen Ansprüche, **dadurch gekennzeichnet, dass** ein axialer Begrenzungsschutz (362) gebildet ist mittels wenigstens einer Ringscheibe (364, 366).

20. Verdichteranordnung (1000) nach einem der vorherigen Ansprüche, **dadurch gekennzeichnet, dass** ein axialer Begrenzungsschutz (362) gebildet ist durch einen Kurbel-Flanschabschnitt (310) und/oder durch einen Ringflansch (247).

21. Druckluftversorgungsanlage (500) zum Betreiben einer Pneumatikanlage (600), aufweisend:
- eine Verdichteranordnung (1000) nach einem der vorherigen Ansprüche,
- einen Lufttrockner (520), und
- eine Ventilanordnung (540).

22. Fahrzeug (800), insbesondere PKW, mit einer Verdichteranordnung nach einem der Ansprüche 1 bis 20 oder einer Druckluftversorgungsanlage (500) nach Anspruch 21 und einer Pneumatikanlage (600).

## Claims

1. Compressor assembly (1000) for a compressed-air feed of a compressed-air supply system for operating a pneumatic system, having:
- a compressor (100, 101, 102, 103) having at least one con-rod (140, 141, 142), a con-rod bearing (160), and a cylinder (170, 171), wherein the con-rod has a compressor piston (150, 150A, 150B, 151),
- a drive (200) having a drive shaft (220), a drive housing (240), wherein the drive shaft (220) is mounted in at least one drive bearing (260) that is disposed within the drive housing (240),
**characterized in that**
- the drive bearing (260) and the con-rod bearing (160) partially or completely overlap one another in the axial direction, or the axial central plane (EA) of the drive bearing (260) and the axial central plane (EP) of the con-rod bearing (160) lie in one bearing plane (E), and wherein
- a crank disk (300) is fixedly connected to an end portion (222) of the drive shaft (220), and furthermore the crank disk (300) on a con-rod receptacle portion (320) that is disposed so as to be eccentric to the drive shaft (220) is rotatably connected to the con-rod (140) by way of the con-rod bearing (160).

2. Compressor assembly (1000) according to Claim 1, **characterized in that** the crank disk (300), the drive bearing (260), and the con-rod bearing (160) are disposed in such a manner that the drive bearing (260) in the radial direction is at least partially situated within the con-rod bearing (160).

3. Compressor assembly (1000) according to Claim 1 or 2, **characterized in that** a flange region (250) for receiving the drive bearing (260) is formed as part of a drive housing cover (242) that is configured on the drive housing (240), and the drive bearing (260) is fastened within the flange region (250).

4. Compressor assembly (1000) according to one of the preceding claims, **characterized in that** the drive housing (240) comprises a motor, in particular an electric motor (290), and at the con-rod side is covered by means of the drive housing cover (242), wherein the drive housing cover (242) at the con-rod side tapers, in particular in a conical manner, toward the flange region (250).

5. Compressor assembly (1000) according to one of the preceding claims, **characterized in that** the drive bearing (260) is fastened, in particular in a force-fitting manner, in particular by way of a press-fit, within the flange region (250).

6. Compressor assembly (1000) according to one of the preceding claims, **characterized in that** the flange region (250) is configured for internally receiving the drive bearing (260) and protrudes into the crank disk (300).

7. Compressor assembly (1000) according to one of the preceding claims, **characterized in that** the crank disk (300) encompasses the flange region (250) by way of a pot-type recess (302) of the crank disk (300) that lies on the internal side of the con-rod receptacle portion (320) and is open toward the drive housing cover (242).

8. Compressor assembly (1000) according to Claim 7, **characterized in that** the pot-type recess (302) of the crank disk (300) lies on the flange region (250), specifically an external side (252) of the flange region (250) and an internal side (304) of the pot-type recess (302) being radially opposite one another and/or guiding one another.

9. Compressor assembly (1000) according to one of the preceding claims, **characterized in that** the crank disk (300) is fixedly connected in a force-fitting manner, in particular in a friction-fitting manner, by way of a conical seat of the crank disk (300) on the end portion (222) of the drive shaft (220), and/or the crank disk (300) fixedly sits on the end portion (222) of the drive shaft (220) by way of a press-fit.

10. Compressor assembly (1000) according to one of the preceding claims, **characterized in that** the drive shaft (220) is mounted within the drive housing (240), in particular on the flange region (250), by means of the con-rod-side drive bearing (260), and in particular on a drive housing base (280) by means of an opposite, motor-side, drive shaft bearing (270) .

11. Compressor assembly (1000) according to one of the preceding claims, **characterized in that** a con-rod balancing weight (180) is disposed on the con-rod (140, 141, 142), in particular on a side of the con-rod (140, 141) that faces away from the compressor piston (150, 151).

12. Compressor assembly (1000) according to one of the preceding claims, **characterized in that** the con-rod (140) has a con-rod ring (143) and a piston rod (144), wherein the con-rod balancing weight (180) is disposed on the con-rod ring (143) in such a manner that the center of gravity (STS) of a sub-system (400) that includes substantially the con-rod (140), the con-rod bearing (160), and the compressor piston (150), by means of the disposal of the con-rod balancing weight (180) on the con-rod (140) is situated on the rotation axis (P) of the con-rod bearing (160).

13. Compressor assembly (1000) according to one of the preceding claims, **characterized in that** a crank-disk balancing weight (340) with the crank disk (300) is fixedly disposed so as to be rotatable on the crank disk (300), in particular in such a manner that, when the compressor piston (150) is at an upper position of the stroke travel (H) of said compressor piston (150), said crank-disk balancing weight (340) is situated on a side of the crank disk (300) that faces away from the compressor piston (150).

14. Compressor assembly (1000) according to one of the preceding claims, **characterized in that** the crank-disk balancing weight (340) is disposed on the crank disk (300) in such a manner that a center of gravity (SMS) of a mass system (420) by means of the disposal of the crank-disk balancing weight (340) is situated in the rotation axis (A) of the drive shaft (220), wherein the mass system (420) includes substantially the sub-system (400) composed of the con-rod (140), the con-rod bearing (160), and the compressor piston (150), as well as the crank disk (300) and optionally fastening elements for fastening the con-rod bearing (160) or further component parts of the system.

15. Compressor assembly (1000) according to one of the preceding claims, **characterized in that** the con-rod (140) and the compressor piston (150, 151) are rigidly connected to one another, the compressor (100, 101) being in particular configured as a positive-displacement piston compressor.

16. Compressor assembly (1000) according to one of the preceding claims, **characterized in that** the compressor (100, 101) is configured as a single-stage compressor (100) or as a multi-stage compressor, in particular a dual-stage compressor (101), and/or the compressor (100, 101) has exactly one con-rod (140, 142) or a plurality of con-rods, in particular one first con-rod (140) and one second con-rod (141).

17. Compressor assembly (1000) according to one of the preceding claims, **characterized in that** the con-rod bearing (160) is formed as a roller bearing, in particular a ball bearing, needle bearing, cylindrical roller bearing, spherical roller bearing, or the like roller bearing, and/or the drive bearing (260) is formed as a friction bearing or needle bearing.

18. Compressor assembly (1000) according to one of the preceding claims, **characterized in that** at least the con-rod ring (143) on the side of the crank disk (300) and/or on the side of the toward the drive housing cover (242) by means of a run-on protection (360) is delimited in an axial movement direction, in particular in the direction of the rotation axis (P) of the con-rod bearing (160).

19. Compressor assembly (1000) according to one of the preceding claims, **characterized in that** an axial delimitation protection (362) is formed by means of at least one annular disk (364, 366).

20. Compressor assembly (1000) according to one of the preceding claims, **characterized in that** an axial delimitation protection (362) is formed by a crankflange portion (310) and/or by an annular flange (247) .

21. Compressed-air supply system (500) for operating a pneumatic system (600), having:
- a compressor assembly (1000) according to one of the preceding claims,
- an air dryer (520), and
- a valve assembly (540).

22. Vehicle (800), in particular passenger motor vehicle, having a compressor assembly according to one of Claims 1 to 20 or a compressed-air supply system (500) according to Claim 21 and a pneumatic system (600).

## Revendications

1. Ensemble compresseur (1000) pour une alimentation en air comprimé d'un système d'alimentation en air comprimé, destiné à faire fonctionner un système pneumatique, présentant :
- un compresseur (100, 101, 102, 103), en particulier un surcompresseur, doté d'au moins une bielle (140, 141, 142), d'un palier de bielle (160) et d'un vérin (170, 171), la bielle présentant un piston de compresseur (150, 150A, 150B, 151),
- un entraînement (200) doté d'un arbre d'entraînement (220) et d'un carter d'entraînement (240), l'arbre d'entraînement (220) étant monté dans au moins un palier d'entraînement (260) disposé à l'intérieur du carter d'entraînement (240),
**caractérisé en ce que**
- le palier d'entraînement (260) et le palier de bielle (160) se recouvrent partiellement ou entièrement dans la direction axiale, ou le plan médian axial (EA) du palier d'entraînement (260) et le plan médian axial (EP) du palier de bielle (160) se situent dans un plan de palier (E), et dans lequel
- un plateau de manivelle (300) est relié solidement à une partie d'extrémité (222) de l'arbre d'entraînement (220), et de plus, le plateau de manivelle (300) est relié en rotation à la bielle (140) par l'intermédiaire du palier de bielle (160), au niveau d'une partie de réception de bielle (320) disposée de manière excentrée par rapport à l'arbre d'entraînement (220).

2. Ensemble compresseur (1000) selon la revendication 1, **caractérisé en ce que** le plateau de manivelle (300), le palier d'entraînement (260) et le palier de bielle (160) sont disposés de telle sorte que le palier d'entraînement (260) est situé au moins partiellement à l'intérieur du palier de bielle (160) dans la direction radiale.

3. Ensemble compresseur (1000) selon la revendication 1 ou 2, **caractérisé en ce qu'**une zone de bride (250) destinée à recevoir le palier d'entraînement (260) est formée comme une partie d'un couvercle de carter d'entraînement (242) réalisé sur le carter d'entraînement (240), et le palier d'entraînement (260) est fixé à l'intérieur de la zone de bride (250).

4. Ensemble compresseur (1000) selon l'une quelconque des revendications précédentes, **caractérisé en ce que** le carter d'entraînement (240) comprend un moteur, en particulier un moteur électrique (290), et est recouvert côté bielle au moyen du couvercle de carter d'entraînement (242), le couvercle de carter d'entraînement (242) s'amincissant côté bielle vers la zone de bride (250), en particulier de manière conique.

5. Ensemble compresseur (1000) selon l'une quelconque des revendications précédentes, **caractérisé en ce que** le palier d'entraînement (260) est fixé à l'intérieur de la zone de bride (250), en particulier par adhérence, en particulier par ajustement serré.

6. Ensemble compresseur (1000) selon l'une quelconque des revendications précédentes, **caractérisé en ce que** la zone de bride (250) est réalisée pour recevoir côté intérieur le palier d'entraînement (260) et fait saillie dans le plateau de manivelle (300).

7. Ensemble compresseur (1000) selon l'une quelconque des revendications précédentes, **caractérisé en ce que** le plateau de manivelle (300) entoure la zone de bride (250) par un évidement en forme de pot (302), ouvert vers le couvercle de carter d'entraînement (242) et situé côté intérieur de la partie de réception de bielle (320).

8. Ensemble compresseur (1000) selon la revendication 7, **caractérisé en ce que** l'évidement en forme de pot (302) du plateau de manivelle (300) est situé au niveau de la zone de bride (250), notamment **en ce qu'**un côté extérieur (252) de la zone de bride (250) et un côté intérieur (304) de l'évidement en forme de pot (302) sont radialement opposés et/ou guidés.

9. Ensemble compresseur (1000) selon l'une quelconque des revendications précédentes, **caractérisé en ce que** le plateau de manivelle (300) est relié solidement par adhérence, en particulier par friction, à la partie d'extrémité (222) de l'arbre d'entraînement (220) par l'intermédiaire d'une embase conique du plateau de manivelle (300), et/ou **en ce que** le plateau de manivelle (300) repose solidement par ajustement serré sur la partie d'extrémité (222) de l'arbre d'entraînement (220).

10. Ensemble compresseur (1000) selon l'une quelconque des revendications précédentes, **caractérisé en ce que** l'arbre d'entraînement (220) est monté au moyen du palier d'entraînement (260) côté bielle à l'intérieur du carter d'entraînement (240), en particulier dans la zone de bride (250), et d'un palier d'arbre d'entraînement (270) opposé côté moteur, en particulier sur un fond de carter d'entraînement (280).

11. Ensemble compresseur (1000) selon l'une quelconque des revendications précédentes, **caractérisé en ce qu'**un contrepoids de bielle (180) est disposé sur la bielle (140, 141, 142), en particulier sur un côté de la bielle (140, 141) détourné du piston de compresseur (150, 151).

12. Ensemble compresseur (1000) selon l'une quelconque des revendications précédentes, **caractérisé en ce que** la bielle (140) présente une bague de bielle (143) et une tige de bielle (144), le contrepoids de bielle (180) étant disposé sur la bague de bielle (143) de telle sorte que le centre de gravité (STS) d'un sous-système (400) présentant substantiellement la bielle (140), le palier de bielle (160) et le piston de compresseur (150), se situe au niveau de la bielle (140) sur l'axe de rotation (P) du palier de bielle (160) grâce à la disposition du contrepoids de bielle (180) .

13. Ensemble compresseur (1000) selon l'une quelconque des revendications précédentes, **caractérisé en ce qu'**un contrepoids de plateau de manivelle (340) est disposé sur le plateau de manivelle (300) de manière solidaire en rotation avec le plateau de manivelle (300), en particulier de telle sorte qu'il se situe sur un côté du plateau de manivelle (300) détourné du piston de compresseur (150) lorsque le piston de compresseur (150) est situé dans une position supérieure de sa course (H).

14. Ensemble compresseur (1000) selon l'une quelconque des revendications précédentes, **caractérisé en ce que** le contrepoids de plateau de manivelle (340) est disposé sur le plateau de manivelle (300) de telle sorte qu'un centre de gravité (SMS) d'un système de masse (420) se trouve sur l'axe de rotation (A) de l'arbre d'entraînement (220) grâce à la disposition du contrepoids de plateau de manivelle (340), dans lequel le système de masse (420) présente substantiellement le sous-système (400) composé de la bielle (140), du palier de bielle (160) et du piston de compresseur (150), ainsi que le plateau de manivelle (300) et le cas échéant des éléments de fixation pour fixer le palier de bielle (160) ou d'autres composants du système.

15. Ensemble compresseur (1000) selon l'une quelconque des revendications précédentes, **caractérisé en ce que** la bielle (140) et le piston de compresseur (150, 151) sont reliés ensemble rigidement, en particulier **en ce que** le compresseur (100, 101) est réalisé sous la forme d'un compresseur à piston oscillant.

16. Ensemble compresseur (1000) selon l'une quelconque des revendications précédentes, **caractérisé en ce que** le compresseur (100, 101) est réalisé sous la forme d'un compresseur (100) à un étage ou d'un compresseur à plusieurs étages, en particulier d'un compresseur (101) à deux étages, et/ou **en ce que** le compresseur (100, 101) présente exactement une bielle (140, 142) ou plusieurs, en particulier une première bielle (140) et une deuxième bielle (141).

17. Ensemble compresseur (1000) selon l'une quelconque des revendications précédentes, **caractérisé en ce que** le palier de bielle (160) est réalisé sous la forme d'un palier à roulement, en particulier d'un roulement à billes, d'un roulement à aiguilles, d'un roulement à rouleaux cylindriques, d'un roulement sphérique à rouleaux ou d'un palier à roulements similaire et/ou **en ce que** le palier d'entraînement (260) est réalisé sous la forme d'un palier lisse ou d'un palier à aiguilles.

18. Ensemble compresseur (1000) selon l'une quelconque des revendications précédentes, **caractérisé en ce qu'**au moins la bague de bielle (143) sur le côté du plateau de manivelle (300) et/ou sur le côté du couvercle de carter d'entraînement (242) au moyen d'une protection de démarrage (360) est limitée dans une direction de mouvement axiale, en particulier dans la direction de l'axe de rotation (P) du palier de bielle (160).

19. Ensemble compresseur (1000) selon l'une quelconque des revendications précédentes, **caractérisé en ce qu'**une protection de limitation axiale (362) est formée au moyen d'au moins une rondelle annulaire (364, 366).

20. Ensemble compresseur (1000) selon l'une quelconque des revendications précédentes, **caractérisé en ce qu'**une protection de limitation axiale (362) est formée par une partie de bride de manivelle (310) et/ou par une bride annulaire (247).

21. Système d'alimentation en air comprimé (500) destiné à faire fonctionner un système pneumatique (600), présentant :
- un ensemble compresseur (1000) selon l'une quelconque des revendications précédentes,
- un séchoir à air (520), et
- un ensemble de soupapes (540).

22. Véhicule (800), en particulier voiture particulière, comprenant un ensemble compresseur selon l'une quelconque des revendications 1 à 20 ou un système d'alimentation en air comprimé (500) selon la revendication 21 et un système pneumatique (600).
